# EUROPEAN PATENT APPLICATION

(11) **EP 4 535 168 A1**
(43) Date of publication of application: **09.04.2025**
(21) Application number: 22948567.7
(22) Date of filing: 30.06.2022
(51) Int. Cl.: G06F 9/50, G06N 3/04

(54) **BLOCKING POLICY GENERATION METHOD AND APPARATUS FOR TENSOR COMPUTATION**

(71) Applicant: Huawei Technologies Co., Ltd., Shenzhen, Guangdong 518129 (CN)
(72) Inventor: LI, Chong, Shenzhen, Guangdong 518129 (CN); TACHON, Thibaut, Shenzhen, Guangdong 518129 (CN); WANG, Hongxing, Shenzhen, Guangdong 518129 (CN); CHEN, Zixi, Shenzhen, Guangdong 518129 (CN)
(74) Representative: Goddar, Heinz J.
(86) International application number: PCT/CN2022/102967
(87) International publication number: WO 2024/000464

(57) **Abstract**

A method for generating a tiling strategy for tensor computation is provided, including obtaining information about a plurality of tensor operations corresponding to tensor computation, where information about each tensor operation includes a tensor computation dimension corresponding to the tensor operation, a data type of an element corresponding to the tensor computation dimension, and a priority of the tensor computation dimension (S301); determining a correspondence between the plurality of tensor operations and a plurality of hardware units, where the plurality of hardware units are configured to perform operations on the tensor computation (S302); obtaining, based on characteristic information of a hardware unit corresponding to a tensor operation, storage space corresponding to the tensor operation, the data type of the element corresponding to the tensor computation dimension, and the priority of the tensor computation dimension, a tiling strategy of the tensor computation dimension corresponding to the tensor operation (S303); and obtaining, based on tiling strategies of tensor computation dimensions corresponding to the plurality of tensor operations, the tiling strategy for the tensor computation (S304). According to this method, tiling strategy code with excellent performance is generated, and overall performance of the tensor computation is improved.

## Description

### TECHNICAL FIELD

This application relates to the field of artificial intelligence technologies, and in particular, to a method and apparatus for generating a tiling strategy for tensor computation.

### BACKGROUND

Deep learning plays an increasingly important role in daily life, for example, language translation and text content understanding and analysis in the field of natural language processing, and facial recognition in the field of computer vision. Deep learning is mainly tensor computation. A tensor is usually stored in a computer as a multidimensional array, and the tensor computation may be described by a series of nested loop combinations.

To improve performance of the tensor computation, various new heterogeneous hardware acceleration solutions are designed and launched, for example, a heterogeneous accelerator that supports matrix multiplication, and a heterogeneous accelerator that improves data reuse and uses a multi-level cache. Hardware vendors usually need to provide a matching computing library. However, development of the computing library is time-consuming and labor-intensive for experts. In addition, the computing library can only adapt to limited known operators for hardware compatibility. With a rapid change of deep learning, neural network models are increasingly different and have increasingly complex and changeable structures. Therefore, there are countless operator combinations for computational graphs used to describe models and structures.

However, when a tiling strategy for tensor computation generated according to a conventional technology is applied to tensor computation, performance of tensor computation is still low.

### SUMMARY

Embodiments of this application provide a method for generating a tiling strategy for tensor computation, to generate tiling strategy code with excellent performance, reduce computing overheads of a hardware accelerator, and improve overall performance of tensor computation.

According to a first aspect, this application provides a method for generating a tiling strategy for tensor computation, including obtaining information about a plurality of tensor operations corresponding to tensor computation, where information about each tensor operation includes a tensor computation dimension corresponding to the tensor operation, a data type of an element corresponding to the tensor computation dimension, and a priority of the tensor computation dimension; determining a correspondence between the plurality of tensor operations and a plurality of hardware units, where the plurality of hardware units are configured to perform operations on the tensor computation; obtaining, based on characteristic information of a hardware unit corresponding to a tensor operation, storage space corresponding to the tensor operation, the data type of the element corresponding to the tensor computation dimension, and the priority of the tensor computation dimension, a tiling strategy of the tensor computation dimension corresponding to the tensor operation, where the characteristic information of the hardware unit indicates a storage characteristic or a computation characteristic of the hardware unit; and obtaining, based on tiling strategies of tensor computation dimensions corresponding to the plurality of tensor operations, the tiling strategy for the tensor computation.

According to the method for generating a tiling strategy for tensor computation provided in embodiments of this application, a tiling strategy in a tensor computation dimension corresponding to each tensor operation is adapted to a characteristic of required hardware, so that quality of the tiling strategy is ensured, code generated based on the method for generating a tiling strategy for tensor computation provided in embodiments of this application has excellent performance, and quality of the tiling strategy does not need to be measured through execution and measurement. This improves a generation speed of a tiling strategy for tensor computation.

In a possible implementation, the obtaining, based on characteristic information of a hardware unit corresponding to a tensor operation, storage space corresponding to the tensor operation, the data type of the element corresponding to the tensor computation dimension, and the priority of the tensor computation dimension, a tiling strategy of the tensor computation dimension corresponding to the tensor operation includes: obtaining a tiling strategy of a first tensor computation dimension based on the characteristic information of the hardware unit corresponding to the tensor operation and a data type of an element corresponding to the first tensor computation dimension; obtaining a tiling strategy of a second tensor computation dimension based on the storage space corresponding to the tensor operation and the tiling strategy of the first tensor computation dimension; and obtaining, based on the tiling strategy of the first tensor computation dimension and the tiling strategy of the second tensor computation dimension, the tiling strategy of the tensor computation dimension corresponding to the tensor operation, where both the first tensor computation dimension and the second tensor computation dimension are tensor computation dimensions corresponding to the tensor operation, and a priority of the first tensor computation dimension is higher than a priority of the second tensor computation dimension.

In this possible implementation, tiling strategies are progressively generated for tensor computation dimensions of each tensor operation. To be specific, a tiling strategy is first generated for a tensor computation dimension with a high priority in a plurality of tensor computation dimensions corresponding to each tensor operation, so that the tiling strategy meets a hardware characteristic to implement validity, and then a maximized-size tiling strategy is generated for a tensor computation dimension with a low priority, to implement efficiency after validity. In this way, a best-performance tiling strategy is generated for each tensor computation dimension.

In a possible implementation, the storage space corresponding to the tensor operation is related to a quantity of tensor operations corresponding to the hardware unit.

In another possible implementation, the method further includes: performing storage reuse analysis on each tensor operation, to determine a tensor operation that may reuse storage space between the plurality of tensor operations corresponding to the hardware unit; and updating, based on a storage reuse analysis result of each tensor operation, the quantity of tensor operations corresponding to the hardware unit.

In another possible implementation, the information about the tensor operation further includes an operation type corresponding to the tensor operation; and the determining a correspondence between the plurality of tensor operations and a plurality of hardware units includes: obtaining, according to a correspondence between the operation type of the tensor operation and a hardware unit, at least one hardware unit corresponding to the tensor operation.

In another possible implementation, the plurality of hardware units include a storage unit and a computing unit, a characteristic of the storage unit includes a storage granularity, and a characteristic of the computing unit includes a per-batch calculation amount.

It may be understood that a meaning of the storage granularity is: A minimum granularity of each read/write operation of the storage unit. For example, if a storage granularity of a storage unit A is 32 B, it indicates that a minimum granularity of each read/write operation of the storage unit A is 32 B. A meaning of the per-batch calculation amount is: A computing resource that needs to be consumed for a computing unit to perform a computation once. For example, a per-batch calculation amount of the computing unit A being 128 B indicates that the computing unit A needs to consume a computing resource of 128 B to perform a computation once.

In another possible implementation, the plurality of hardware units include different types of storage units and/or different types of computing units.

According to a second aspect, this application provides a method for generating a tiling strategy for tensor computation, including: obtaining information about a plurality of tensor operations corresponding to the tensor computation, where information about each tensor operation includes an operation type and a hardware label, and the hardware label represents a hardware unit on which the operation type depends; determining a topology corresponding to a plurality of hardware units, where the topology includes a plurality of nodes, and the nodes represent the hardware units related to the tensor computation; establishing, based on the operation type and the hardware label, a mapping relationship between the plurality of tensor operations and the plurality of nodes in the topology corresponding to the plurality of hardware units, where the topology is tree-shaped and includes a root node, a branch node, and a leaf node; determining, for the plurality of nodes in a direction from the root node to a leaf node, a tiling strategy of a tensor computation dimension corresponding to a tensor operation corresponding to a node; and obtaining, based on a tiling strategy of a tensor computation dimension corresponding to a tensor operation corresponding to each of the plurality of nodes, the tiling strategy for the tensor computation.

According to the method for generating a tiling strategy for tensor computation provided in embodiments of this application, a structure of a hardware accelerator is abstracted into a tree topology, each tensor operation of the tensor computation is mapped to each node in the tree topology, and tiling strategy analysis of the tensor computation is converted into analysis and solution of a graph structure (the tree topology), namely, analysis of each node in the tree topology. A tiling strategy for the tensor computation can be obtained by analyzing each node. This does not require expensive and sensitive profiling hardware to measure performance, and improves a generation speed of a tiling strategy for tensor computation.

In a possible implementation, the topology further includes a plurality of unidirectional edges, the unidirectional edge is used to connect different nodes, and the unidirectional edge represents a relationship between the nodes.

In another possible implementation, the plurality of unidirectional edges include a first-type unidirectional edge, a second-type unidirectional edge, and/or a third-type unidirectional edge; the first-type unidirectional edge represents that tiling strategies of tensor computation dimensions corresponding to tensor operations corresponding to nodes connected by the first-type unidirectional edge are the same; the second-type unidirectional edge represents that a tiling strategy does not need to be determined for a tensor computation dimension corresponding to a tensor operation corresponding to a node to which the second-type unidirectional edge points; and the third-type unidirectional edge represents that hardware units represented by nodes connected by the third-type unidirectional edge are communicatively connected.

In another possible implementation, the tiling strategy of the tensor computation dimension corresponding to the tensor operation corresponding to the node is related to allocated storage space of a hardware unit represented by the node; and the allocated storage space of the hardware unit represented by the node is related to a quantity of available sibling nodes of the node, where the sibling node is a node located at a same layer as the node, and represents a same hardware unit type.

In another possible implementation, the quantity of the available sibling nodes of the node is related to a data size corresponding to the tensor operation and a quantity of sibling nodes.

In another possible implementation, hardware units represented by the root node and the branch node are storage units, and a hardware unit represented by the leaf node is a computing unit.

In another possible implementation, the plurality of hardware units include different types of storage units and/or different types of computing units.

According to a third aspect, this application provides an apparatus for generating a tiling strategy for tensor computation, including:
an obtaining module, configured to obtain information about a plurality of tensor operations corresponding to tensor computation, where information about each tensor operation includes a tensor computation dimension corresponding to the tensor operation, a data type of an element corresponding to the tensor computation dimension, and a priority of the tensor computation dimension;
a determining module, configured to determine a correspondence between the plurality of tensor operations and a plurality of hardware units, where the plurality of hardware units are configured to perform operations on the tensor computation;
a tiling strategy generation module, configured to: obtain, based on characteristic information of a hardware unit corresponding to a tensor operation, storage space corresponding to the tensor operation, the data type of the element corresponding to the tensor computation dimension, and the priority of the tensor computation dimension, a tiling strategy of the tensor computation dimension corresponding to the tensor operation, where the characteristic information of the hardware unit indicates a storage characteristic or a computation characteristic of the hardware unit; and
obtain, based on tiling strategies of tensor computation dimensions corresponding to the plurality of tensor operations, the tiling strategy for the tensor computation.

In a possible implementation, the tiling strategy generation module is specifically configured to:
obtain a tiling strategy of a first tensor computation dimension based on the characteristic information of the hardware unit corresponding to the tensor operation and a data type of an element corresponding to the first tensor computation dimension;
obtain a tiling strategy of a second tensor computation dimension based on the storage space corresponding to the tensor operation and the tiling strategy of the first tensor computation dimension; and
obtain, based on the tiling strategy of the first tensor computation dimension and the tiling strategy of the second tensor computation dimension, the tiling strategy of the tensor computation dimension corresponding to the tensor operation, where
both the first tensor computation dimension and the second tensor computation dimension are tensor computation dimensions corresponding to the tensor operation, and a priority of the first tensor computation dimension is higher than a priority of the second tensor computation dimension.

In another possible implementation, the storage space corresponding to the tensor operation is related to a quantity of tensor operations corresponding to the hardware unit.

For example, storage space corresponding to tensor operations is 8 KB. In other words, storage space that may be allocated by a hardware unit A corresponding to tensor operations to tensor computation is 8 KB, and a quantity of tensor operations corresponding to the hardware unit A is 4. In this case, storage space that may be allocated by the hardware unit A to one tensor operation is 8 KB/4=2 KB, that is, storage space corresponding to one tensor operation is 2 KB.

In another possible implementation, the apparatus further includes:
a reuse analysis module, configured to perform storage reuse analysis on a plurality of tensor operations corresponding to the hardware unit, to determine a tensor operation that may reuse storage space between the plurality of tensor operations corresponding to the hardware unit; and
an updating module, configured to update, based on a storage reuse analysis result of each tensor operation, the quantity of tensor operations corresponding to the hardware unit.

In another possible implementation, the information about the tensor operation further includes an operation type corresponding to the tensor operation; and
the determining module is specifically configured to:
obtain, according to a correspondence between operation types corresponding to a plurality of tensor operations and hardware units, at least one hardware unit corresponding to the tensor operation.

In another possible implementation, the plurality of hardware units include a storage unit and a computing unit, a characteristic of the storage unit includes a storage granularity, and a characteristic of the computing unit includes a per-batch calculation amount.

In another possible implementation, the plurality of hardware units include different types of storage units and/or different types of computing units.

According to a fourth aspect, this application further provides an apparatus for generating a tiling strategy for tensor computation, including:
an obtaining module, configured to obtain information about a plurality of tensor operations corresponding to the tensor computation, where information about each tensor operation includes an operation type and a hardware label, and the hardware label represents a hardware unit on which the operation type depends; and a plurality of hardware units are configured to perform operations on the tensor computation;
a determining module, configured to determine a topology corresponding to a plurality of hardware units, where the topology includes a plurality of nodes, and the nodes represent the hardware units related to the tensor computation;
a mapping module, configured to establish, based on the operation type and the hardware label, a mapping relationship between the plurality of tensor operations and the plurality of nodes in the topology corresponding to the plurality of hardware units, where the topology is tree-shaped and includes a root node, a branch node, and a leaf node; and
a tiling strategy generation module, configured to: determine, for the plurality of nodes in a direction from the root node to a leaf node, a tiling strategy of a tensor computation dimension corresponding to a tensor operation corresponding to a node; and
obtain, based on a tiling strategy of a tensor computation dimension corresponding to a tensor operation corresponding to each of the plurality of nodes, the tiling strategy for the tensor computation.

In another possible implementation, the topology further includes a plurality of unidirectional edges, the unidirectional edge is used to connect different nodes, and the unidirectional edge represents a relationship between the nodes.

In another possible implementation, the plurality of unidirectional edges include a first-type unidirectional edge, a second-type unidirectional edge, and/or a third-type unidirectional edge.

The first-type unidirectional edge represents that tiling strategies of tensor computation dimensions corresponding to tensor operations corresponding to nodes connected by the first-type unidirectional edge are the same.

The second-type unidirectional edge represents that a tiling strategy does not need to be determined for a tensor computation dimension corresponding to a tensor operation corresponding to a node to which the second-type unidirectional edge points.

The third-type unidirectional edge represents that hardware units represented by nodes connected by the third-type unidirectional edge are communicatively connected.

In another possible implementation, the tiling strategy of the tensor computation dimension corresponding to the tensor operation corresponding to the node is related to allocated storage space of a hardware unit represented by the node.

The allocated storage space of the hardware unit represented by the node is related to a quantity of available sibling nodes of the node, where the sibling node is a node located at a same layer as the node, and represents a same hardware unit type.

In another possible implementation, the quantity of the available sibling nodes of the node is related to a data size corresponding to the tensor operation and a quantity of sibling nodes.

In another possible implementation, hardware units represented by the root node and the branch node are storage units, and a hardware unit represented by the leaf node is a computing unit.

In another possible implementation, the plurality of hardware units include different types of storage units and/or different types of computing units.

According to a fifth aspect, this application provides a computing device, including a memory and a processor, where the memory stores executable code, and the processor executes the executable code to implement the method provided in the first aspect and/or the method provided in the second aspect of this application.

According to a sixth aspect, this application provides a computer-readable storage medium, where the computer-readable storage medium stores a computer program, and when the computer program is executed on a computer, the computer is enabled to perform the method provided in the first aspect and/or the method provided in the second aspect of this application.

According to a seventh aspect, this application provides a computer program or a computer program product, where the computer program or the computer program product includes instructions, and when the instructions are executed, the method provided in the first aspect and/or the method provided in the second aspect of this application are/is implemented.

### BRIEF DESCRIPTION OF DRAWINGS

FIG. 1a is a diagram of an application scenario of a method for generating a tiling strategy for tensor computation;
FIG. 1b is a diagram of computation in which tiling is not performed for tensor computation;
FIG. 1c is a diagram of computation after tiling is performed for tensor computation;
FIG. 1d is a flowchart of a method for implementing a first solution;
FIG. 1e is a flowchart of a method for implementing a second solution;
FIG. 2a is a method for generating a tiling strategy for tensor computation according to an embodiment of this application;
FIG. 2b is another method for generating a tiling strategy for tensor computation according to an embodiment of this application;
FIG. 2c is another method for generating a tiling strategy for tensor computation according to an embodiment of this application;
FIG. 3 is a diagram of a tree topology;
FIG. 4A to FIG. 4D are a diagram of analyzing each node layer by layer based on a tree topology;
FIG. 5 is a diagram of a table of a relationship between a tensor operation and hardware of Ascend 910;
FIG. 6 is a diagram of a tree topology corresponding to Ascend 910;
FIG. 7 is a diagram of tensor computation axis information;
FIG. 8 is a diagram of a tree topology obtained after tensor operations are mapped;
FIG. 9 is a diagram of a tree topology obtained after tensor operations are mapped and after reuse analysis is performed;
FIG. 10 is a diagram of tensor computation axis information with information about an available storage size;
FIG. 11 is a diagram of tensor computation axis information with information about an optimized and adjusted available storage size;
FIG. 12 is a diagram of tensor computation axis information with tiling strategy information;
FIG. 13 is a diagram of a tiling strategy generated according to a method for generating a tiling strategy for tensor computation according to an embodiment of this application;
FIG. 14 is diagram of another type of tensor computation axis information;
FIG. 15 is a diagram of another tree topology obtained after tensor operations are mapped;
FIG. 16 is a diagram of another tree topology obtained after tensor operations are mapped and after reuse analysis is performed;
FIG. 17 is a diagram of another type of tensor computation axis information with information about an available storage size;
FIG. 18 is a diagram of another type of tensor computation axis information with information about an optimized and adjusted available storage size;
FIG. 19 is a diagram of another type of tensor computation axis information with tiling strategy information;
FIG. 20 is a diagram of another type of tensor computation axis information with tiling strategy information;
FIG. 21 is a diagram of another type of tensor computation axis information with tiling strategy information;
FIG. 22 is a diagram of another type of tensor computation axis information with tiling strategy information;
FIG. 23 is a diagram of another type of tensor computation axis information with tiling strategy information;
FIG. 24 is a diagram of a tiling strategy generated according to a method for generating a tiling strategy for tensor computation according to an embodiment of this application;
FIG. 25 is a diagram of comparison of execution time of a fused operator with reduction under different tiling strategies;
FIG. 26 is a diagram of comparison of execution time of a fused operator with matrix multiplication under different tiling strategies;
FIG. 27a is a diagram of a structure of an apparatus for generating a tiling strategy for tensor computation according to an embodiment of this application;
FIG. 27b is a diagram of a structure of another apparatus for generating a tiling strategy for tensor computation according to an embodiment of this application;
FIG. 27c is a diagram of a structure of another apparatus for generating a tiling strategy for tensor computation according to an embodiment of this application; and
FIG. 28 is a diagram of a structure of a computing device according to an embodiment of this application.

### DESCRIPTION OF EMBODIMENTS

The technical solutions of this application are further described in the following in detail with reference to accompanying drawings and embodiments.

To better understand technical solutions provided in embodiments of this application, the following briefly describes some terms in the technical solutions.

An operator may be understood as a mapping from one function space to another function space. An operation like exponentiation or root extraction performed on any independent variable may be considered as an operator.

A tensor may be understood as an n-dimensional array, where n is an integer greater than or equal to 1, and is an n-dimensional generalization of a scalar, a vector, and a matrix. For example, a scalar is a zeroth-order tensor, a vector is a first-order tensor, and a matrix is a second-order tensor. In model training of machine learning, both training data and an intermediate computation result may be considered as tensors.

A computational graph is a manner of describing tensor computation (for example, a neural network model) by using a graph structure. The neural network model may be abstracted as a directed graph structure including a tensor and an operator. The graph structure includes a node and a directed edge. The node represents an operator, and the directed edge describes a relationship between operators, and represents a dependency relationship between the operators and a data flow direction of the tensor.

A hardware accelerator for tensor computation is dedicated acceleration computing hardware used for tensor computation (for example, computation of an operation like multiplication and addition of tensor data). For example, the hardware accelerator for tensor computation may be a graphics processing unit (graphics processing unit, GPU) launched by NVIDIA, a tensor processing unit (tensor processing unit, TPU) launched by Google, an Ascend neural-network processing unit (neural-network processing unit, NPU) launched by Huawei, or the like.

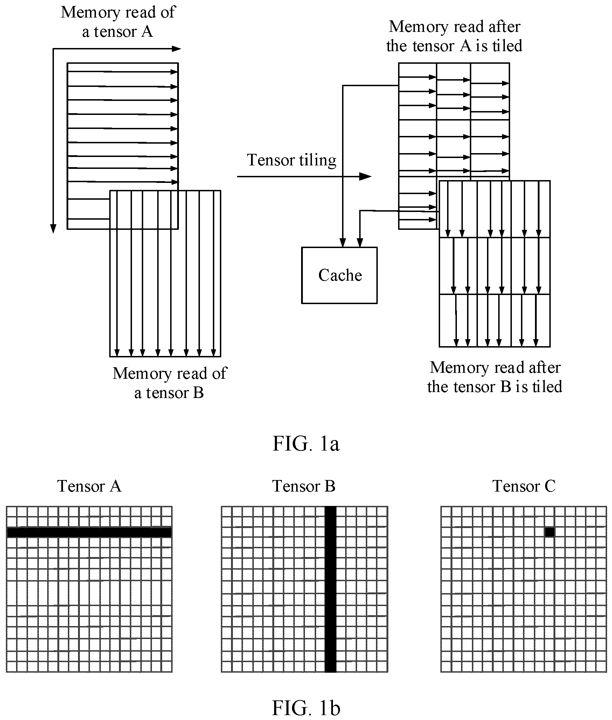

FIG. 1a is a diagram of an application scenario of a method for generating a tiling strategy for tensor computation. As shown in FIG. 1a, tensor data (for example, a tensor A and a tensor B) in tensor computation is tiled into blocks. A tensor obtained through tiling may be referred to as a tensor block. Then, computation is separately performed on tensor blocks obtained through tiling, to finally obtain a tensor computation result. For example, a tensor is a second-order tensor, and tensor computation is matrix computation. Before tensor tiling, memory reading needs to be performed on each row and each column of the tensor A and the tensor B, and memory overheads are high. After tiling, the tensor A and the tensor B are tiled into a plurality of smaller tensor blocks, and the tensor blocks may be placed in a cache for reuse. This reduces the memory overheads.

FIG. 1b is a diagram of computation in which tiling is not performed for tensor computation. As shown in FIG. 1b, tensor computation is matrix computation, and tiling is not performed during tensor computation. A tensor A and a tensor B are input tensors, and a tensor C is output after an operator operation. To be specific, the tensor C is obtained after the tensor A and the tensor B are computed. Each point (which represents each element in the tensor C) in the tensor C needs to completely read a row of the tensor A and a column of the tensor C. In this case, memory overheads required for tensor computation are 2 ×M×N×K, where M represents a length of a vertical dimension of the tensor A (namely, a quantity of elements in a column of the tensor A), N represents a length of a horizontal dimension of the tensor B, and K represents a length of a horizontal dimension of the tensor A or a length of a vertical dimension of the tensor B.

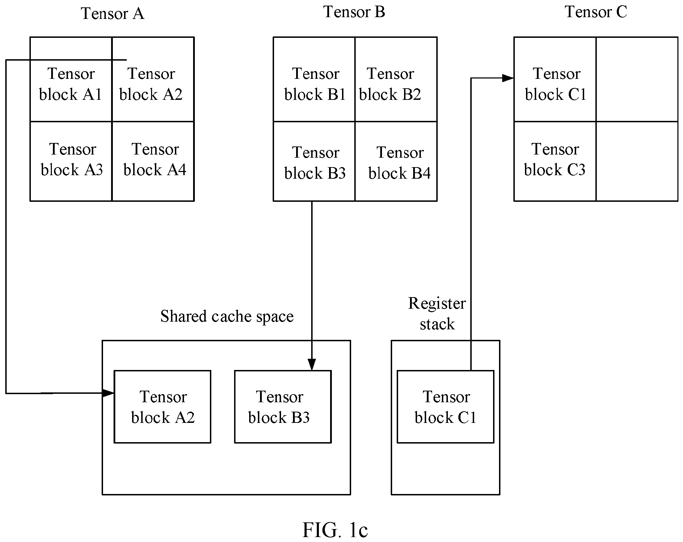

FIG. 1c is a diagram of computation after tiling is performed for tensor computation. As shown in FIG. 1c, the tensor computation is matrix computation. After tiling is performed for tensor computation, a tensor A and a tensor B are tiled into T×T tensor blocks. In this case, memory overheads required for the tensor computation are 2×M×N×K/T, and the T×T tensor blocks obtained through tiling of the tensor A and the tensor B may be reserved in a cache (cache) for reuse.

After tiling is performed for the tensor computation, multi-level storage units of a hardware accelerator may be used to reduce communication duration, computing units may be used in parallel to reduce computation duration. By using pipelining, storage and computation can be performed in parallel, thereby reducing the overall duration.

To improve performance of tensor computation, increasingly more complex hardware accelerators are designed. For example, the GPU launched by NVIDIA includes hardware units such as SM, Warp, and Tensor Core; the TPU launched by Google includes hardware units such as TPU Chip, TPU Core, MXU, and VPU; the Ascend NPU launched by Huawei includes hardware units such as AI Core, CUB, VEC, UB, L1, L0A, LOB and L0C.

The foregoing accelerators are mostly heterogeneous accelerators, and include a heterogeneous parallel computing unit and a heterogeneous storage unit. Different types of computing units have different execution modes, parallelism degrees, granularities, and the like. Different types of storage units have different storage space, multi-level storage topologies, and the like.

In a tiling strategy for tensor computation, a topology of a hardware accelerator and a characteristic of each hardware unit need to be fully considered, to generate an excellent tiling strategy, so that tensor computation is more suitable for the hardware accelerator, and performance of the hardware accelerator is better utilized.

However, most conventional methods for generating a tiling strategy are for a neatly nested homogeneous architecture, and it is difficult to analyze a heterogeneous architecture clearly and efficiently. In addition, different compute and storage units need to be used together in a fused operator computational graph. This further increases analysis difficulty.

To obtain a better tiling strategy (tiling size) for tensor computation, so that the tensor computation is more suitable for a hardware accelerator, and performance of the hardware accelerator is better utilized, embodiments of this application provide the following several solutions:

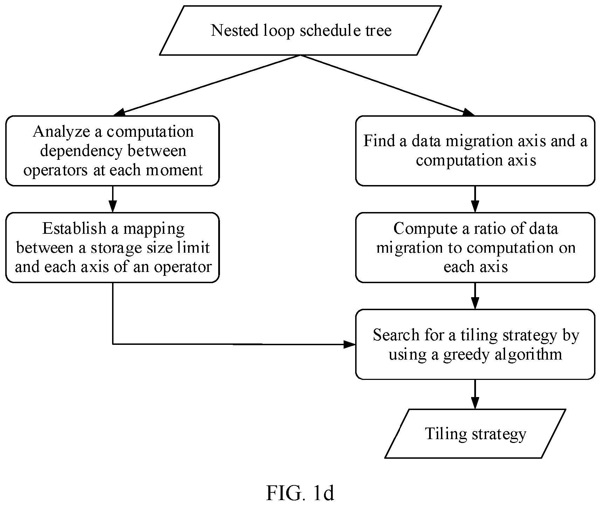

A first solution is finding a mapping between a storage size limit and an axis in nested loops by using a nested loop schedule tree as an input, computing a ratio of data migration to computation, and using the mapping and the ratio as constraint conditions to search for a best tiling strategy by using a greedy algorithm. Refer to FIG. 1d. A specific implementation includes the following steps: S1: Derive an operator that survives at each moment based on a computation dependency between operators in a nested loop schedule tree. S2: Map the operator that survives at each moment to a storage, and establish a mapping relationship between each axis of the operator and a storage size limit. S3: Find, in the schedule tree, a data axis related to data migration and a computation axis related to computation. S4: Generate a mapping between data migration and an axis and generate a mapping between computation and an axis based on the found axes, and compute a ratio of a data migration mapping to a computation mapping. S5: Search for a best tiling strategy by using the greedy algorithm with the storage mapping in step S2 and the ratio in step S4 as the constraint conditions.

However, this solution has the following problem: When a computational graph is constituted by fusing a plurality of operators, a plurality of different hardware units of an accelerator need to be simultaneously invoked, there are different constraint conditions for different combinations of computing units and storage units. Therefore, it is difficult to meet all conditions by using a single data-to-computation ratio, and an excellent tiling strategy cannot be found for a complex operator. In addition, only the computation dependency between operators is considered in storage and derivation, but a possibility of concurrency between data reading, computation, and write-back is not considered. Therefore, a read/write possibility and a computation possibility cannot be accurately computed. Therefore, a storage size of an accelerator that can perform read/write and computation concurrently cannot be accurately computed. The excellent tiling strategy may not be found, or a found tiling strategy is an invalid tiling strategy.

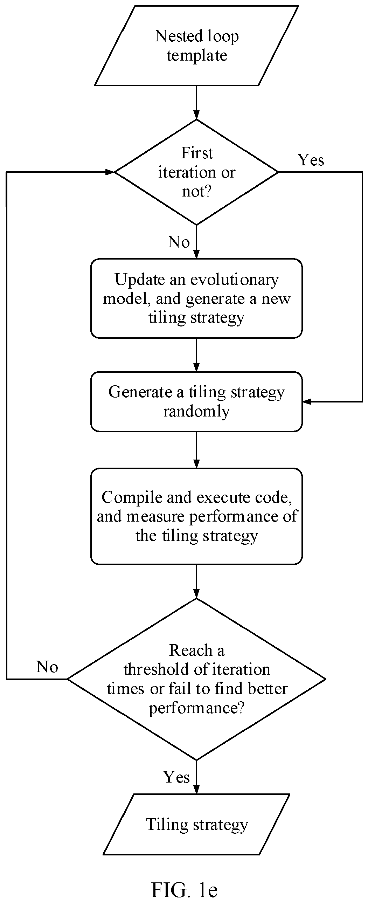

A second solution is using a nested loop template as an input, using an evolutionary model to generate a tiling strategy, measuring performance to determine whether the strategy is good or bad, and continuously updating the evolutionary model, to approach a best tiling strategy. Specifically, refer to FIG. 1e. The following steps are included: S11: If it is a first iteration, obtain a tiling strategy range in a nested loop template, and randomly generate a tiling strategy; and if it is not the first iteration, update an evolutionary model, and include a tiling strategy generated by the model to a tiling strategy randomly generated in a new round. S12: Deploy the tiling strategy in loop tiling computation of a fused operator, compile and generate executable code, execute the code on hardware, and measure performance. S13: Determine whether better performance is no longer obtained or whether a threshold of iteration times is reached; if yes, output a tiling strategy; if no, continue to perform step S11. S14: Repeat step S11 to step S13 until iterations stop and output a final tiling strategy.

However, this solution has the following problems: When the iteration times reach the threshold, a search stops, and therefore, an excellent tiling strategy is still not found. A tiling strategy generated at each time needs to be actually executed and measured to determine performance, execution and measurement are time-consuming, and an excellent tiling strategy cannot be quickly found. Performance measurement is based on an execution time measurement value, is very sensitive to software and hardware configurations and a load change, and is prone to be affected. This causes a subsequent search error, or the like.

To resolve the problems in the foregoing solutions and a conventional tiling strategy, an embodiment of this application provides a method for generating a tiling strategy for tensor computation, to generate tiling strategy code with optimal performance, reduce computing overheads of a hardware accelerator, and improve overall performance of tensor computation. In addition, a tiling strategy does not need to be measured through execution and measurement. This improves a generation speed of a tiling strategy for tensor computation.

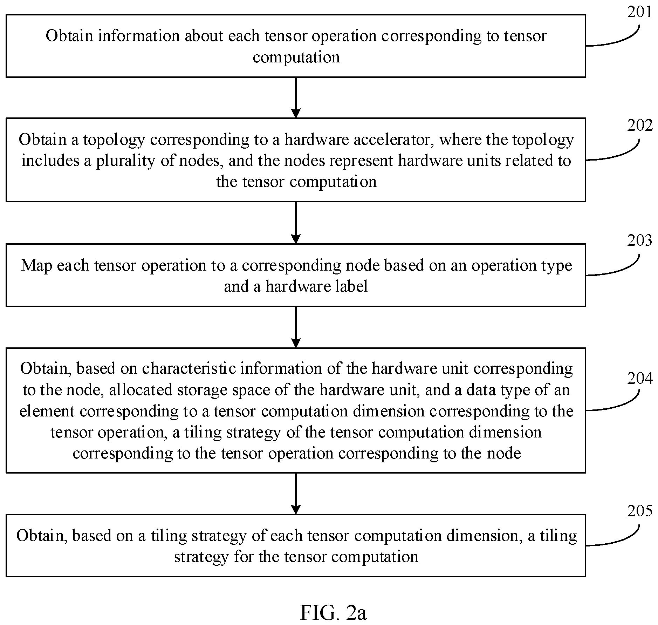

FIG. 2a is a method for generating a tiling strategy for tensor computation according to an embodiment of this application. As shown in FIG. 2a, the method includes step S201 to step S205.

In step S201, information about each tensor operation corresponding to tensor computation is obtained.

The information about each tensor operation may include a tensor computation dimension corresponding to the tensor operation, an element quantity in the tensor computation dimension, a data type of an element, an operation type, and a hardware label, where the hardware label represents a hardware unit on which the operation type depends.

In an example, the information about each tensor operation corresponding to the tensor computation may be obtained based on an intermediate representation (intermediate representation, IR) corresponding to the tensor computation and a table of a relationship between the tensor computation and a hardware accelerator. The intermediate representation corresponding to the tensor computation includes a tensor computation dimension corresponding to each tensor operation corresponding to the tensor computation, an element quantity corresponding to each tensor computation dimension, the data type of the element, and the operation type of the tensor operation. The table of the relationship between the tensor computation and the hardware accelerator includes a correspondence between the operation type and each hardware unit in the hardware accelerator.

By analyzing the intermediate representation corresponding to the tensor computation, a nested loop representation corresponding to the tensor computation is obtained. The nested loop representation corresponding to the tensor computation is a description of each operation in the tensor computation in a computational graph execution process, and includes a type of an operation and a dimension related to the operation. For example, an addition operation of a two-dimensional tensor may be expressed as: result(dim0,dim1)=operant0(dim0,dim1)+operantl(dim0,dim1), including an addition operation "+", two operands "operant0" and "operant1", and two dimensions "dim0" and "dim1" related to the operation.

In some other examples, an operation of tensor computation may alternatively be expressed by using other methods such as a tree structure and a pointer form.

The table of the relationship between the tensor computation and the hardware accelerator includes information about a hardware unit used in each tensor operation (read/write or computation). For example, a matrix computing unit needs to be used for a matrix multiplication operation, a vector computing unit needs to be used for a vector multiplication operation, and a level-1 storage unit needs to be used for an operation of reading data to the level-1 storage unit.

It should be noted that, unless otherwise specified, a tensor computation axis or axis mentioned below has a same meaning as a tensor computation dimension.

In step S202, a topology corresponding to the hardware accelerator is obtained, where the topology includes a plurality of nodes, and the nodes represent hardware units related to the tensor computation.

The hardware accelerator is dedicated computing hardware configured to perform tensor computation such as addition and multiplication, to reduce duration of tensor computation. For example, the hardware accelerator may be a GPU, a TPU, an NPU, or the like.

Hardware information of the hardware accelerator is obtained, where the hardware information may include information about each hardware unit of the hardware accelerator and topology information of the hardware unit. For example, the information about each hardware unit includes characteristic information of each hardware unit. For example, when a hardware unit is a storage unit, a characteristic of the storage unit includes a storage granularity, and when a hardware unit is a computing unit, a characteristic of the computing unit includes a per-batch calculation amount. For example, topology information of hardware units includes a communication connection relationship between the hardware units, for example, a communication connection relationship between storage units, and a communication connection relationship between storage units and computing units.

Optionally, the characteristic of the storage unit further includes a read speed.

Optionally, the storage unit includes a programmable storage unit and/or a non-programmable storage unit.

The hardware information is abstractly expressed as a graph structure. The graph structure includes a plurality of nodes and connection edges representing relationships between the nodes. The nodes represent hardware units (for example, storage units and computing units) related to the tensor computation, and the connection edges represent communication relationships between the hardware units.

Optionally, the graph structure is of a tree topology. In other words, the hardware information of the hardware accelerator is abstractly expressed as the tree topology. The tree topology includes a root node, a branch node, and a leaf node. The root node and the branch node represent hardware units used for storage, and the leaf node represents a hardware unit used for computation.

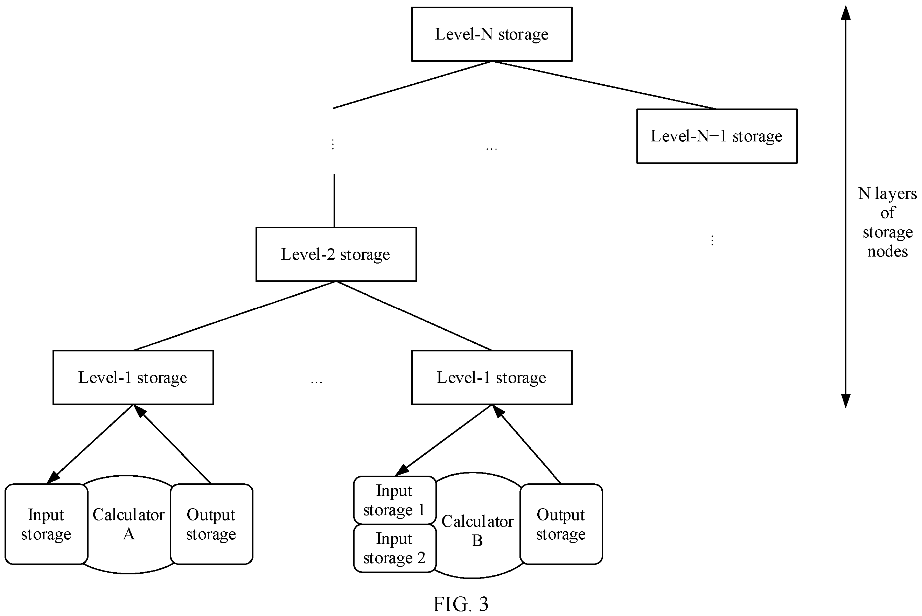

In an example, as shown in FIG. 3, a tree topology includes N layers of storage nodes (a root node and branch nodes) and one layer of calculator nodes. Nodes are connected by connection edges.

Each node in the tree topology has characteristic information of corresponding hardware. For example, a computing node has per-batch calculation amount information, and a storage node has storage granularity information. Each computing node has an input storage and an output storage of the computing node.

In another example, connection edges are unidirectional edges, and the unidirectional edges include a first-type edge, a second-type edge, and/or a third-type edge. The first-type unidirectional edge represents that tiling strategies of a node to which the unidirectional edge (an arrow direction) points and a node that is at the other end of the unidirectional edge are the same. The second-type unidirectional edge represents that a tiling strategy does not need to be determined for a node to which the unidirectional edge (an arrow direction) points. The third-type edge represents that hardware units represented by nodes connected by the unidirectional edge are communicatively connected. For example, a third-type unidirectional edge is a common unidirectional edge. That is, the unidirectional edge is not marked. A first-type unidirectional edge is Cost=0. That is, Cost=0 is marked on a unidirectional edge, to indicate that the unidirectional edge is the second-type unidirectional edge. A second-type unidirectional edge is Bypass. That is, Bypass is marked on a unidirectional edge, to indicate that the unidirectional edge is the third-type unidirectional side.

In this step, the hardware information of the hardware accelerator is expressed as a hierarchical topology description, and concurrency of computation and read/write is converted into a relationship between layers to participate in analysis of generation of a tiling strategy.

It should be noted that, in embodiments of this application, the hardware information of the hardware acceleration is only abstractly expressed as the tree topology. This does not mean that a topology of each hardware unit in the hardware accelerator is actually a tree topology.

In step S203, each tensor operation is mapped to a corresponding node based on the operation type and the hardware label.

The tensor operation corresponding to the operation type is mapped to a corresponding node in the tree topology based on the hardware label corresponding to the tensor operation.

In step S204, a tiling strategy of the tensor computation dimension corresponding to the tensor operation corresponding to the node is obtained based on characteristic information of a hardware unit corresponding to a node, allocated storage space of the hardware unit, and the data type of the element corresponding to the tensor computation dimension corresponding to the tensor operation, where the allocated storage space of the hardware unit is obtained based on storage space of the hardware unit and a quantity of tensor operations corresponding to the node.

Tensor computation dimensions corresponding to the node have different priorities, and a tiling strategy generation sequence of the tensor computation dimensions corresponding to the node is determined based on the priorities of the tensor computation dimensions.

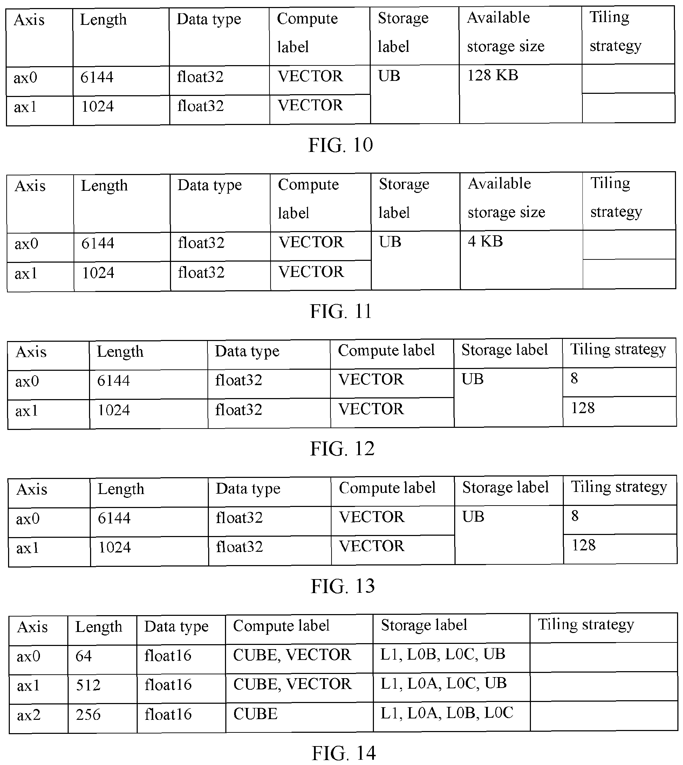

A priority of a tensor computation dimension (which may also be referred to as a tensor computation axis or an axis) may be determined by using a plurality of different methods. For example, all known compilers preferentially perform storage in a sequence from an outermost axis (for example, an axis ax0 in FIG. 10) to an innermost axis (for example, an axis ax1 in FIG. 10), and perform computation from the innermost axis. Therefore, the storage is prioritized from the outermost axis to the innermost axis, and the computation is prioritized from the innermost axis. Certainly, embodiments of this application also support another type of priority determining method. For example, a priority is determined from inside out, or a priority is determined starting from a second axis. A proper priority determining method for a tensor computation axis may be selected based on a requirement. A specific priority determining method for a tensor computation axis is not specifically limited in embodiments of this application.

For example, the tensor computation dimensions corresponding to the node include a first tensor computation dimension and a second tensor computation dimension, and a priority of the first tensor computation dimension is higher than a priority of the second tensor computation dimension.

First, a tiling strategy of the first tensor computation dimension is obtained based on characteristic information of a hardware unit corresponding to a node and a data type of an element corresponding to the first tensor computation dimension. In other words, the first computation dimension meets a characteristic of the hardware unit corresponding to the node. Then, a tiling strategy of the second tensor computation dimension is determined based on allocated storage space of the hardware unit and the tiling strategy of the first tensor computation dimension. In other words, a maximum tiling strategy that does not exceed the allocated storage space is generated for a computation dimension other than the first computation dimension.

The allocated storage space corresponding to the node is obtained based on storage space of the hardware unit and a quantity of tensor operations corresponding to the node. For example, if the storage space of the hardware unit corresponding to the node is 256 KB, and the quantity of tensor operations corresponding to the node is 2, the allocated storage space corresponding to the node is 256 KB/2=128 KB.

It may be understood that the allocated storage space corresponding to the node means storage space allocated, by the hardware unit corresponding to the node, to the tensor computation dimension corresponding to the node.

It should be noted that, unless otherwise specified, an available storage size mentioned below has the same meaning as the allocated storage space.

In an example, the allocated storage space of the hardware unit corresponding to the node is also related to data of available sibling nodes corresponding to the node. For example, if a quantity of sibling nodes of the node is N, and a quantity of available sibling nodes is M, the allocated storage space corresponding to the node is storage space of the node divided by M. For example, if the node M is 32, and storage space corresponding to the node is 256 KB, the allocated storage space of the node is 256 KB/32=8 KB.

The quantity M of available sibling nodes is related to a data size S of a tensor operation and the quantity N of sibling nodes of a same type. For example, if S>N, M is a greatest common divisor of S and N, and if S≤N, M=S.

In an example, an analysis sequence of a plurality of nodes in a tree topology is determined based on the tree topology. Tiling strategies are sequentially generated, based on the sequence, for tensor computation dimensions corresponding to tensor operations corresponding to each node.

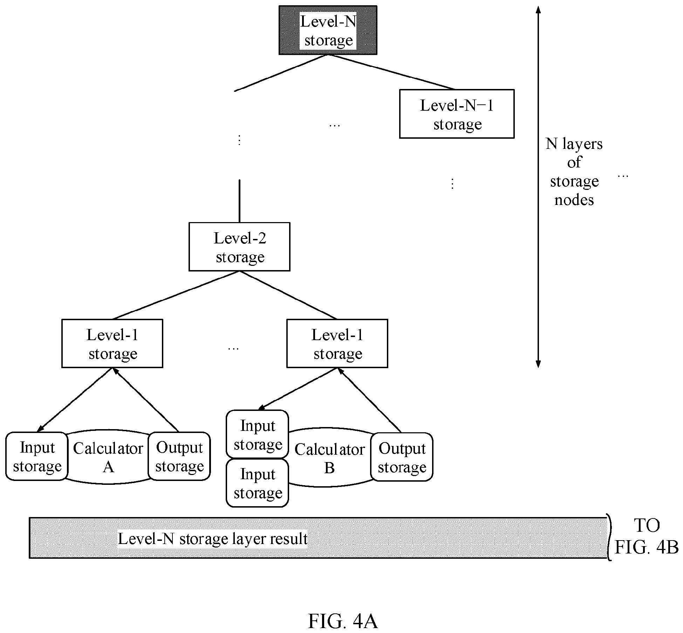

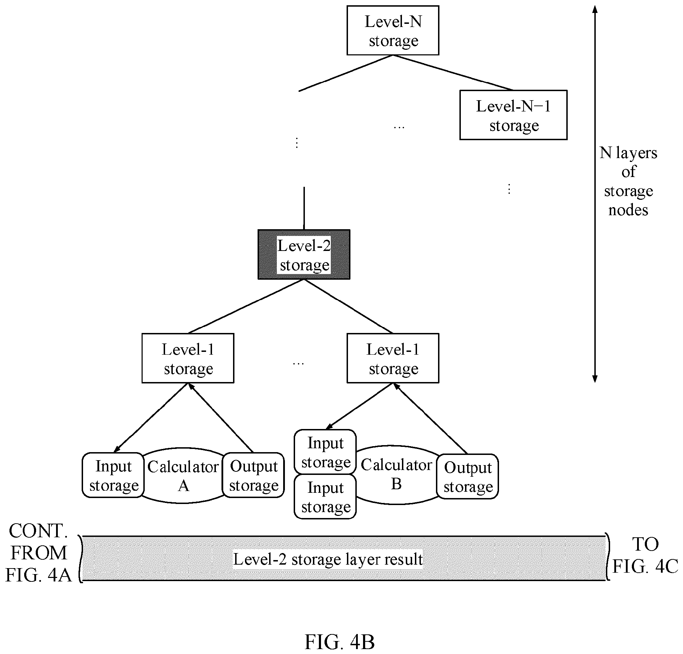

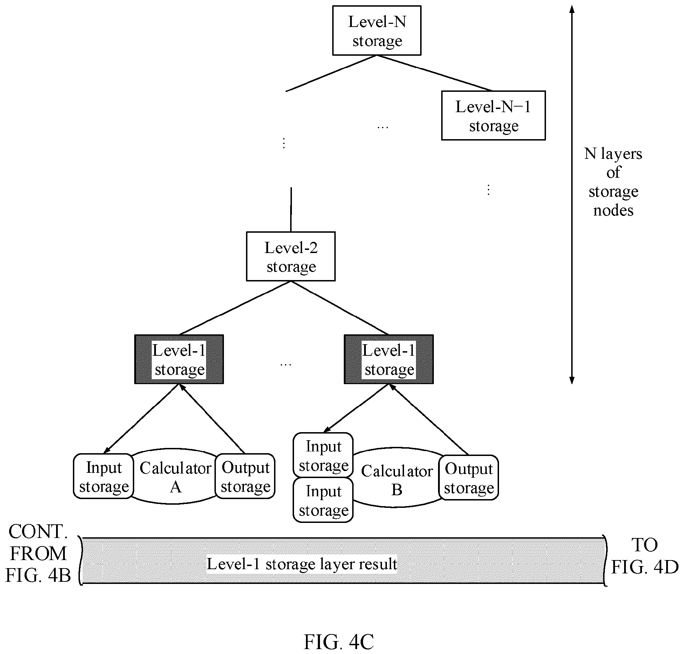

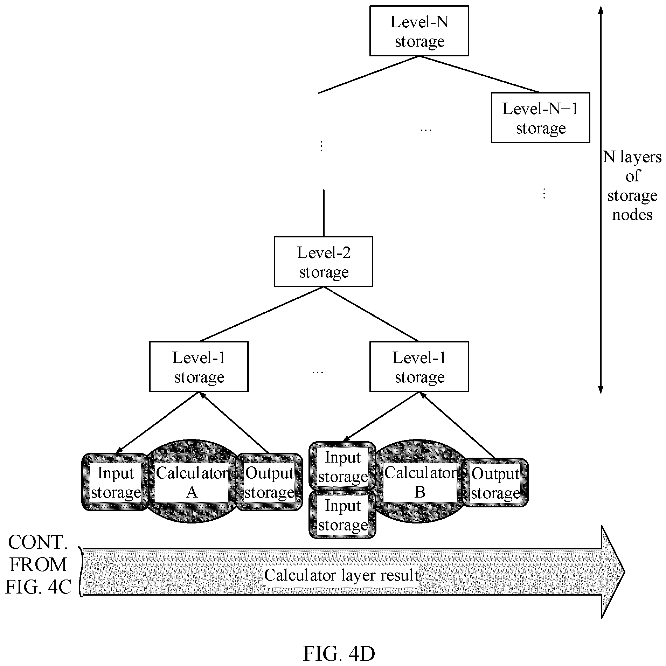

In other words, based on the tree topology, the tiling strategies are progressively prepared for each node in a specific sequence. For example, the nodes are traversed layer by layer from top to bottom (from the root node to the leaf node) based on the tree topology. In other words, a tiling strategy is determined for a tensor computation dimension corresponding to a node at each layer in the sequence from top to bottom (from the root node to the leaf node) based on a hierarchy relationship determined in the tree topology. As shown in FIG. 4A to FIG. 4D, a tiling strategy is first determined for a node at an N^{th} layer (namely, a tensor computation dimension corresponding to the node). Then, a tiling strategy is determined for a node at an (N-1)^{th} layer, ..., a tiling strategy is determined for a node at a second layer, a tiling strategy is determined for a node at a 1^{st} layer, and finally a tiling strategy is determined for a computing node at a computing layer. Nodes are traversed at each layer in any sequence. When different types of nodes appear at a same layer, a priority of node analysis is determined based on priority information of a connection edge in the tree topology. In other words, the connection edge further has priority attribute information. A method for generating a tiling strategy is invoked on each non-root node, to generate tiling strategies corresponding to all tensor computation axes. If one tensor computation axis has a plurality of tiling strategies, a tiling strategy that meets all conditions is selected. If a tiling strategy of a specific node does not need to be output, invoking of the method for generating a tiling strategy may be skipped for the node.

In this step, a tiling strategy of each node is analyzed based on a topology sequence, so that different hardware units invoked by a computational graph including complex fused operators can be fully analyzed.

In step S205, a tiling strategy for the tensor computation is obtained based on a tiling strategy of each tensor computation dimension.

The tiling strategy of the entire tensor computation is determined based on the tiling strategy of each tensor computation dimension, tensor data is tiled into a plurality of tensor blocks according to the tiling strategy for the tensor computation, and then the tensor blocks obtained through tiling are separately computed, to finally obtain a tensor computation result.

In another example, the method for generating a tiling strategy for tensor computation provided in embodiments of this application further includes: performing memory reuse analysis on a tensor computation operation corresponding to each node, and updating, based on a memory reuse analysis result, a quantity of tensor computation operations corresponding to each node.

Optionally, the hardware accelerator is of a heterogeneous architecture. In other words, the hardware accelerator includes a plurality of storage units, the plurality of storage units include different types of storage units, and/or include a plurality of computing units, where the plurality of computing units include different types of computing units.

According to the method for generating a tiling strategy for tensor computation provided in embodiments of this application, the tiling strategies are progressively prepared, and uncertain iterative optimization in an original tiling strategy for tensor computation is optimized into approximation of several steps to generate an excellent tiling strategy for tensor computation. In addition, a method for generating a tiling strategy based on a hardware unit characteristic, for example, including a parallelism degree of each hardware unit, a storage granularity of a storage unit, and a per-batch calculation amount of a computing unit, is provided, to derive an excellent tiling strategy, and there is no need to measure the tiling strategy through execution and measurement.

In another aspect, this also avoids geometric expansion of solution space caused by a combination of a computation constraint and a hardware architecture constraint, and avoids a convergence problem and a local optimization problem of a heuristic algorithm.

The method for generating a tiling strategy for tensor computation provided in embodiments of this application may be applied to a plurality of scenarios involving tensor computation. For example, the method is applied to a training scenario of a neural network. When new computational graphs are frequently generated due to operations such as modulation of a training parameter and changing of a network structure, an efficient tiling strategy for tensor computation is provided within given time. The method is applied to a scientific computing scenario, to meet an instant tiling strategy requirement that is generated by optimization like a dynamic shape and that is for computation. The method is applied to a use scenario of a hardware design vendor, so that a computing library of the hardware design vendor can quickly generate a tiling strategy, to meet a user performance requirement for new complex operators.

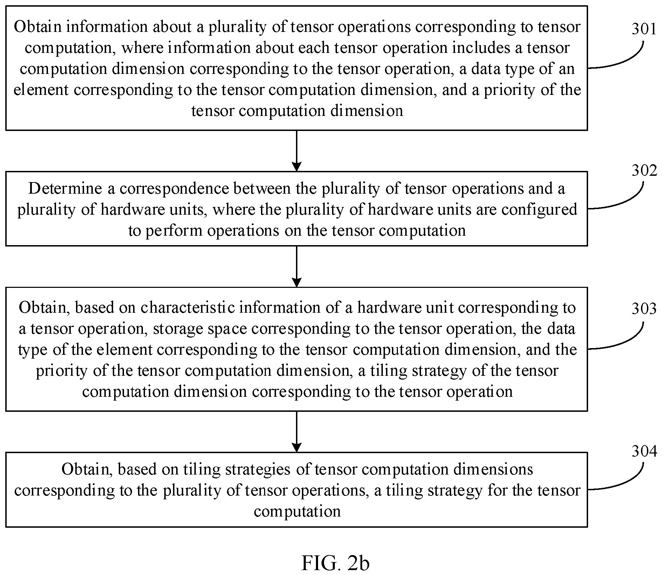

FIG. 2b is a flowchart of another method for generating a tiling strategy for tensor computation. As shown in FIG. 2b, the method includes step S301 to step S304.

In step S301, information about a plurality of tensor operations corresponding to tensor computation is obtained. Information about each tensor operation includes a tensor computation dimension corresponding to the tensor operation, a data type of an element corresponding to the tensor computation dimension, and a priority of the tensor computation dimension.

For a specific method for obtaining the information about the plurality of tensor operations corresponding to the tensor computation, refer to the foregoing descriptions. For brevity, details are not described herein again.

In step S302, a correspondence between the plurality of tensor operations and a plurality of hardware units is determined, where the plurality of hardware units are configured to perform operations on the tensor computation.

Information about a tensor operation further includes an operation type corresponding to the tensor operation; and a correspondence between the tensor operation and each hardware unit in a hardware accelerator is obtained based on the operation type corresponding to the tensor operation and a table of a relationship between the tensor operation and the hardware accelerator.

The table of the relationship between the tensor operation and the hardware accelerator includes a correspondence between the operation type and each hardware unit in the hardware accelerator.

In step S303, a tiling strategy of the tensor computation dimension corresponding to the tensor operation is obtained based on characteristic information of a hardware unit corresponding to a tensor operation, storage space corresponding to the tensor operation, the data type of the element corresponding to the tensor computation dimension, and the priority of the tensor computation dimension, where the characteristic information of the hardware unit indicates a storage characteristic or a computing characteristic of the hardware unit. For example, when the hardware unit is a storage unit, a characteristic of the hardware unit is a storage characteristic (for example, a storage granularity); or when the hardware unit is a computing unit, a characteristic of the hardware unit is a computing characteristic (for example, a per-batch calculation amount).

A tiling strategy of a first tensor computation dimension is obtained based on the characteristic information of the hardware unit corresponding to the tensor operation and a data type of an element corresponding to the first tensor computation dimension. A tiling strategy of a second tensor computation dimension is obtained based on the storage space corresponding to the tensor operation and the tiling strategy of the first tensor computation dimension. A tiling strategy of the tensor operation is obtained based on the tiling strategy of the first tensor computation dimension and the tiling strategy of the second tensor computation dimension. Both the first tensor computation dimension and the second tensor computation dimension are tensor computation dimensions corresponding to the tensor operation, and a priority of the first tensor computation dimension is higher than a priority of the second tensor computation dimension.

For example, tensor computation dimensions corresponding to the tensor operation include at least the first tensor computation dimension and the second tensor computation dimension, and data types of elements of the first tensor computation dimension and the second tensor computation dimension that correspond to the tensor operation are both float32. The hardware unit corresponding to the tensor operation is the storage unit, and the characteristic information of the storage unit is the storage granularity. For example, the storage granularity of the storage unit is 32 B, and allocated storage space of the storage unit is 4 KB. During storage, a priority of the first tensor computation dimension is higher than a priority of the second tensor computation dimension. Therefore, the tiling strategy is first generated for the first tensor computation dimension (with a higher priority), and then the tiling strategy is generated for the second tensor computation dimension (with a lower priority). An element type (that is, float32, where a size is 4 B) of the first tensor computation dimension in the tensor operation meets a characteristic (where the storage granularity is 32 B) of the storage unit, that is, 32 B/4 B=8, to obtain the tiling strategy that is of the first tensor computation dimension corresponding to the tensor operation and that is 8. The tiling strategy of the second tensor computation dimension is obtained based on 8, namely, the tiling strategy of the first tensor computation dimension, and 4 KB, the allocated storage space of the storage unit, that is, 44*1024 B/4 B/8=128. Finally, the tiling strategy that is of the first tensor computation dimension corresponding to the tensor operation and that is 8 is obtained (that is, every eight elements are one tensor block), and the tiling strategy of the second tensor computation dimension is 128 (every 128 elements are one tensor block).

In step S304, the tiling strategy for the tensor computation is obtained based on tiling strategies of tensor computation dimensions corresponding to the plurality of tensor operations.

The tiling strategy of the entire tensor computation is determined based on a tiling strategy of a tensor computation dimension corresponding to each tensor operation, to tile tensor data into a plurality of tensor blocks according to the tiling strategy for the tensor computation. Computation is separately performed on the tensor blocks obtained through tiling, to finally obtain a tensor computation result, and improve a computation speed of the entire tensor computation.

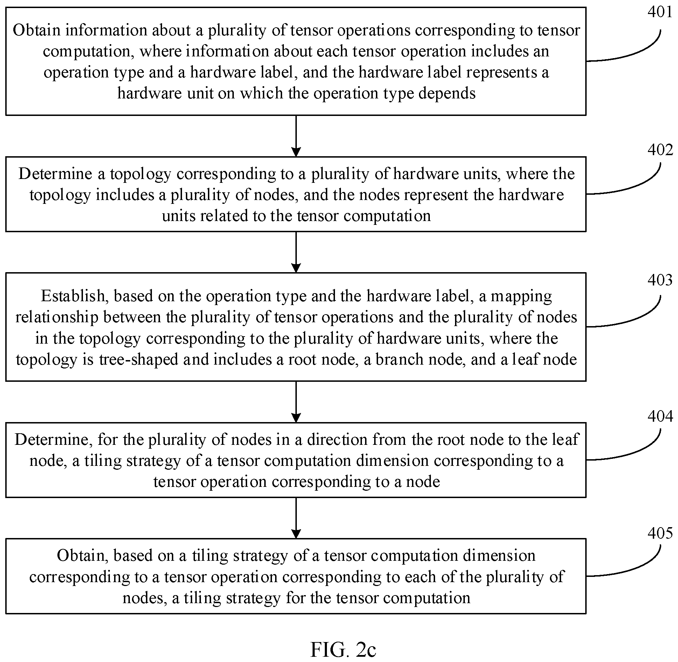

FIG. 2c is a flowchart of another method for generating a tiling strategy for tensor computation. As shown in FIG. 2c, the method includes step S401 to step S405.

In step S401, information about a plurality of tensor operations corresponding to the tensor computation is obtained, where information about each tensor operation includes an operation type and a hardware label, and the hardware label represents a hardware unit on which the operation type depends; and a plurality of hardware accelerators are configured to perform operations on the tensor computation.

For a specific method for obtaining the information about the plurality of tensor operations corresponding to the tensor computation, refer to the foregoing descriptions. For brevity, details are not described herein again.

In step S402, a topology corresponding to a plurality of hardware units is determined, where the topology includes a plurality of nodes, and the nodes represent the hardware units related to the tensor computation.

Hardware information of the hardware accelerator is obtained, where the hardware information may include information about each hardware unit of the hardware accelerator and topology information of the hardware unit. For example, the information about each hardware unit includes characteristic information of each hardware unit. For example, when a hardware unit is a storage unit, a characteristic of the storage unit includes a storage granularity, and when a hardware unit is a computing unit, a characteristic of the computing unit includes a per-batch calculation amount. For example, topology information of hardware units includes a communication connection relationship between the hardware units, for example, a communication connection relationship between storage units, and a communication connection relationship between storage units and computing units.

Optionally, the characteristic of the storage unit further includes a read speed.

Optionally, the storage unit includes a programmable storage unit and/or a non-programmable storage unit.

The hardware information is abstractly expressed as a graph structure. The graph structure includes a plurality of nodes and connection edges representing relationships between the nodes. The nodes represent hardware units (for example, storage units and computing units) related to the tensor computation, and the connection edges represent communication relationships between the hardware units.

Optionally, the graph structure is of a tree topology. In other words, the hardware information of the hardware accelerator is abstractly expressed as the tree topology. The tree topology includes a root node, a branch node, and a leaf node. The root node and the branch node represent hardware units used for storage, and the leaf node represents a hardware unit used for computation.

In an example, as shown in FIG. 3, a tree topology includes N layers of storage nodes (a root node and branch nodes) and one layer of calculator nodes. Nodes are connected by connection edges.

Each node in the tree topology has characteristic information of corresponding hardware. For example, a computing node has per-batch calculation amount information, and a storage node has storage granularity information. Each computing node has an input storage and an output storage of the computing node.

In another example, connection edges are unidirectional edges, and the unidirectional edges include a first-type edge, a second-type edge, and/or a third-type edge. A first-type unidirectional edge represents a node to which the unidirectional edge (an arrow direction) points and a node that is at the other end of the unidirectional edge have a same tiling strategy. A second-type unidirectional edge represents that a tiling strategy does not need to be determined for a node to which the unidirectional edge (an arrow direction) points. A third-type edge represents a communication connection between hardware units represented by nodes connected by the unidirectional edge. For example, a third-type unidirectional edge is a common unidirectional edge. That is, the unidirectional edge is not marked. A first-type unidirectional edge is Cost=0. That is, Cost=0 is marked on a unidirectional edge, to indicate that the unidirectional edge is the second-type unidirectional edge. A second-type unidirectional edge is Bypass. That is, Bypass is marked on a unidirectional edge, to indicate that the unidirectional edge is the third-type unidirectional side.

In this step, the hardware information of the hardware accelerator is expressed as a hierarchical topology description, and concurrency of computation and read/write is converted into a relationship between layers to participate in analysis of generation of a tiling strategy.

It should be noted that, in embodiments of this application, the hardware information of the hardware acceleration is only abstractly expressed as the tree topology. This does not mean that a topology of each hardware unit in the hardware accelerator is actually a tree topology.

In step S403, a mapping relationship between the plurality of tensor operations and the plurality of nodes in the topology corresponding to the plurality of hardware units is established based on the operation type and the hardware label, where the topology is tree-shaped and includes a root node, a branch node, and a leaf node.

A tensor computation operation corresponding to an operation type is mapped to a corresponding node in the tree topology based on a hardware label corresponding to the tensor computation operation.

In step S404, a tiling strategy of a tensor computation dimension corresponding to a tensor operation corresponding to a node is determined for the plurality of nodes in a direction from the root node to the leaf node.

Optionally, a sequence of the nodes may be determined based on a hierarchy relationship between levels, and a tiling strategy of a tensor computation dimension corresponding to a tensor operation corresponding to each node is determined for the node in a sequence from a high level to a low level (that is, from the root node to the leaf node). For example, a tiling strategy of a tensor computation dimension corresponding to a tensor operation corresponding to a branch node of an (N-1)^{th} layer (a layer closest to the root node) is first determined, then a tiling strategy of a tensor computation dimension corresponding to a tensor operation corresponding to a node at an (N-2)^{th} layer is determined for the node, and the like. Finally, a tiling strategy of a tensor computation dimension corresponding to a tensor operation corresponding to a leaf node is determined for the node.

In other words, based on the tree topology, tiling strategies are progressively prepared for each node in a specific sequence. For example, the nodes are traversed layer by layer from top to bottom (from the root node to the leaf node) based on the tree topology. In other words, a tiling strategy is determined for a tensor computation dimension corresponding to a node at each layer in a sequence from top to bottom (from the root node to the leaf node) based on a hierarchy relationship determined in the tree topology. As shown in FIG. 4A to FIG. 4D, a tiling strategy is first determined for a node at an N^{th} layer (namely, a tensor computation dimension corresponding to the node). Then, a tiling strategy is determined for a node at an (N-1)^{th} layer, ..., a tiling strategy is determined for a node at a second layer, a tiling strategy is determined for a node at a 1^{st} layer, and finally a tiling strategy is determined for a computing node at a computing layer. Nodes are traversed at each layer in any sequence. When different types of nodes appear at a same layer, a priority of node analysis is determined based on priority information of a connection edge in the tree topology. In other words, the connection edge further has priority attribute information. A method for generating a tiling strategy is invoked on each non-root node, to generate tiling strategies corresponding to all tensor computation axes. If one tensor computation axis has a plurality of tiling strategies, a tiling strategy that meets all conditions is selected. If a tiling strategy of a specific node does not need to be output, invoking of the method for generating a tiling strategy may be skipped for the node.

In this step, a tiling strategy of each node is analyzed based on a topology sequence, so that different hardware units invoked by a computational graph including complex fused operators can be fully analyzed.

In step S405, the tiling strategy for the tensor computation is obtained based on a tiling strategy of a tensor computation dimension corresponding to a tensor operation corresponding to each of the plurality of nodes.

The tiling strategy for the tensor computation is obtained based on a tiling strategy of a tensor computation dimension corresponding to a tensor operation corresponding to each node, to tile tensor data into a plurality of tensor blocks according to the tiling strategy for the tensor computation. Then, computation is separately performed on the tensor blocks obtained through tiling, to finally obtain a tensor computation result, and improve a computation speed of the entire tensor computation.

The following uses an example in which a hardware accelerator is Ascend 910 to describe in detail an implementation, during actual application, of the method for generating a tiling strategy for tensor computation provided in embodiments of this application.

First, an example in which a hardware accelerator is Ascend 910 and a computational graph is a combination of a plurality of vector computation operators is used to describe a specific implementation of the method for generating a tiling strategy for tensor computation provided in embodiments of this application.

A nested loop representation of the tensor computation, namely, a description of each operation of the tensor computation in a computational graph in which a plurality of vector computation operators are fused is obtained, including an operation type and corresponding information. The obtained nested loop representation of the tensor computation is as follows:

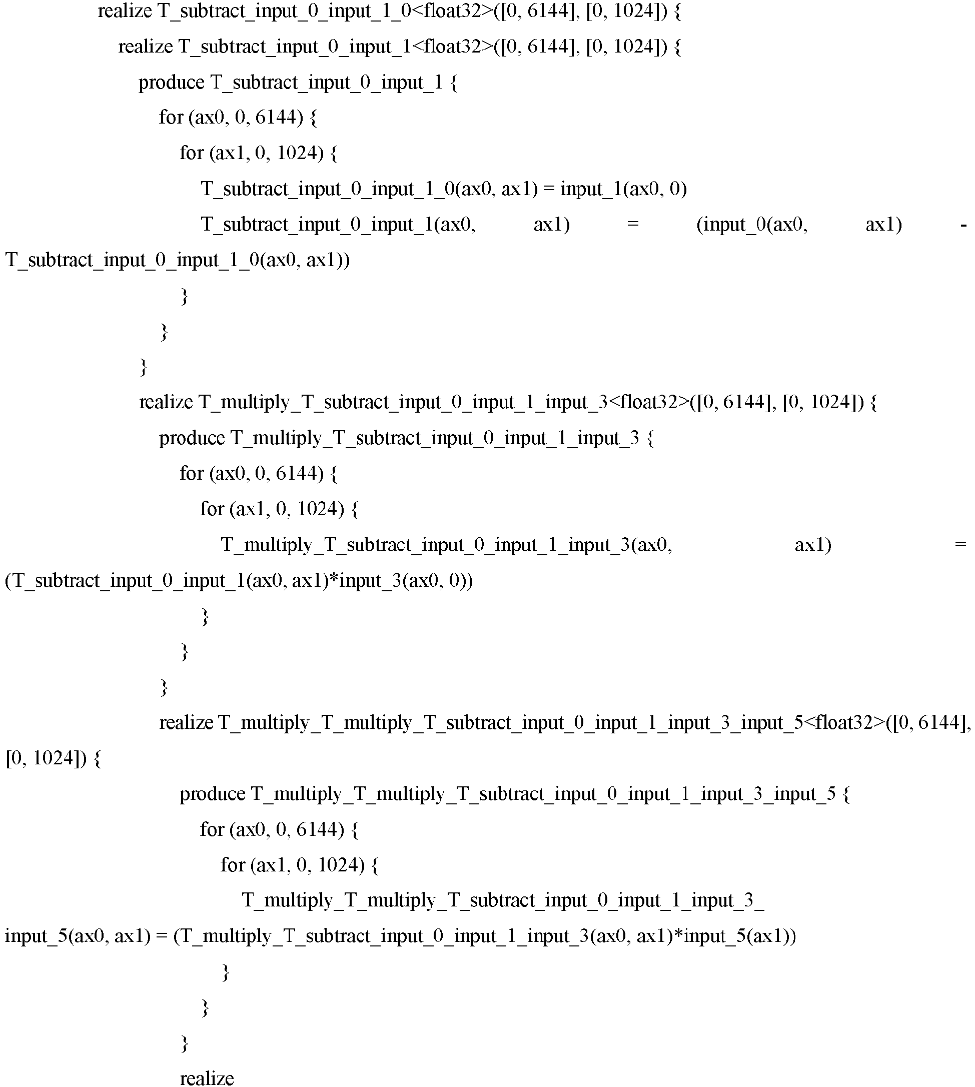

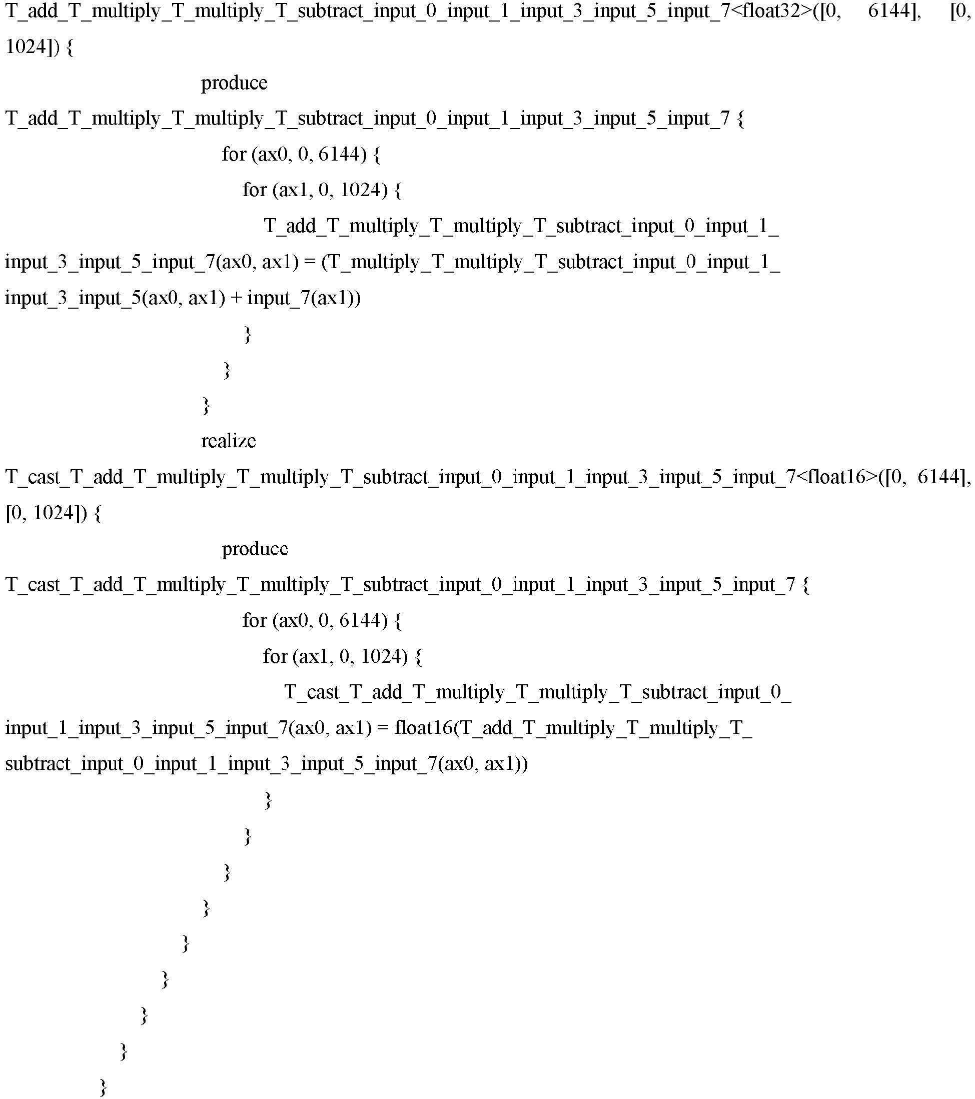

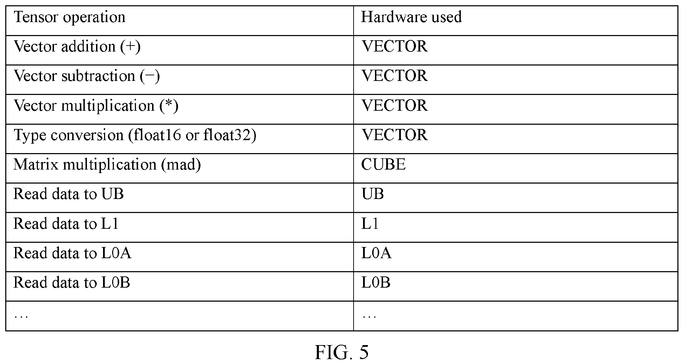

A table of a relationship between a tensor operation and hardware of Ascend 910 is obtained, as shown in FIG. 5.

A tree topology is constructed after hardware information abstraction of Ascend 910.

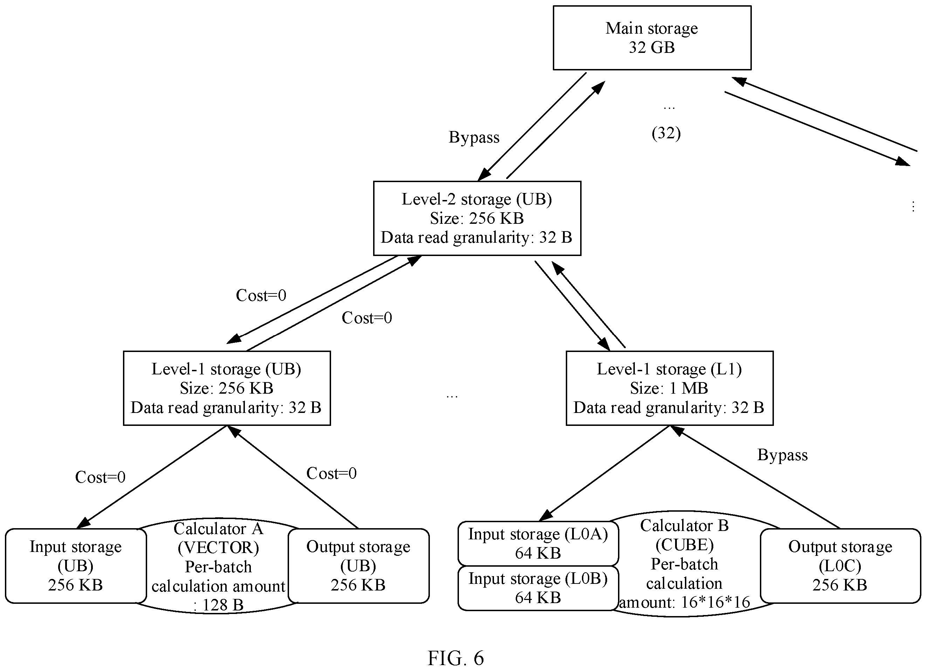

As shown in FIG. 6, a tree topology corresponding to Ascend 910 includes three storage layers. A root node at a level-3 storage layer is a main storage node, and has a storage size of 32 GB.

Nodes at a level-2 storage layer are branch nodes, and include 32 level-2 storage UB nodes. Storage space of each UB storage node is 256 KB. A node characteristic is a data read granularity of 32 B. A unidirectional edge from the main storage node to a level-2 storage UB node has an attribute Bypass. In other words, data can be directly read from the level-3 storage layer to a level-1 storage layer, and the level-2 storage layer is bypassed. A unidirectional edge from a level-2 storage UB node to the main storage node is a common unidirectional edge.

Nodes at the level-1 storage layer are also branch nodes. The level-1 storage layer includes a plurality of groups of storage nodes. Each group of storage nodes includes a level-1 storage UB node and a level-1 storage L1 node. Each group of nodes is connected to a level-2 storage UB node at the level-2 storage layer. Storage space of the level-1 storage UB node is 256 KB, and a node characteristic is a data read granularity of 32 B. Storage space of the level-1 storage L1 node is 1 MB, and a node characteristic is a data read granularity of 32 B. A unidirectional edge from a level-2 storage UB node to a level-1 storage UB node and a unidirectional edge from the level-1 storage UB node to the level-2 storage UB node have an attribute of Cost=0. In other words, the level-2 storage UB node and the level-1 storage UB node are equivalent, and have same attributes and tiling strategies. A unidirectional edge from a level-2 storage UB node to a level-1 storage L1 node and a unidirectional edge from the level-1 storage L1 node to the level-2 storage UB node are common unidirectional edges.

Compute layer nodes are leaf layer nodes, and include a plurality of computing nodes, for example, a VECTOR calculator node and a CUBE calculator node. The VECTOR calculator node is connected to a level-1 storage UB node. A per-batch calculation amount of the VECTOR calculator node is 128 B. An input storage of the VECTOR calculator node is UB. A storage size of the input storage UB is 256 KB. The VECTOR calculator node is equivalent to the level-1 storage UB node. An output storage of the VECTOR calculator node is UB. A storage size is 256 KB. The VECTOR calculator node is equivalent to the level-1 storage UB node. The CUBE calculator node is connected to a level-1 storage L1 node. A per-batch calculation amount of the CUBE calculator node is 16*16*16. The CUBE calculator node has two input storages: LOA and L0B. Storage sizes are both 64 KB. An output storage of the CUBE calculator node is L0C. A storage size is 256 KB. The level-1 storage L1 node may be bypassed.

Information about tensor operation is extracted from the nested loop representation, and includes a corresponding axis, an axis length, a data type, and a corresponding hardware label.

In the nested loop representation, a 1^{st} operation is reading data from a main storage to UB. Corresponding dimensions are ax0 and ax1, lengths are 6144 and 1024, and a data type is float32. Corresponding storage hardware being UB can be found in the table of a relationship between a tensor operation and hardware of Ascend 910. The information is stored in axis information.

In the nested loop representation, a 2^{nd} operation is reading data from the main storage to the UB. Corresponding dimensions are ax0 and ax1, lengths are 6144 and 1024, and a data type is float32. Corresponding storage hardware being UB can be found in the table of a relationship between a tensor operation and hardware of Ascend 910. However, the same information already exists in the axis information and does not need to be stored again.

In the nested loop representation, a 3^{rd} operation is vector subtraction. Corresponding dimensions are ax0 and ax1, lengths are 6144 and 1024, and a data type is float32. Corresponding computing hardware being VECTOR can be found in the table of a relationship between a tensor operation and hardware of Ascend 910. The information is stored in the axis information.

Other operations in the nested loop representation are all operations of reading data from the main storage to UB or vector operations, and corresponding information is the same and does not need to be stored again.

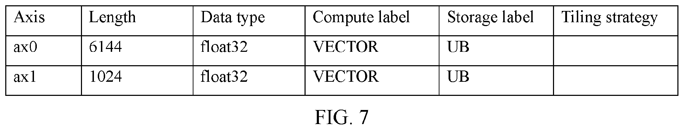

For obtained tensor computation axis information, refer to FIG. 7. A meaning of a length of a tensor computation axis is a quantity of elements on the computation axis, and a meaning of a data type is a data type of an element. For example, a meaning that a length of a tensor computation axis ax0 is 6144 means that the axis has 6144 elements whose data type is float32.

A tensor operation is mapped to a tree topology with a hardware label.

In a nested loop representation, a 1^{st} operation is reading data from a main storage to UB. A storage label of a corresponding tensor computation dimension is UB. Therefore, the 1^{st} operation is mapped to a UB storage node in the tree topology.

In the nested loop representation, a 2^{nd} operation is reading data from the main storage to UB. A storage label of a corresponding tensor computation dimension is UB. Therefore, the 2^{nd} operation is mapped to a UB storage node in the tree topology.

In the nested loop representation, a 3^{rd} operation is vector subtraction. A storage label of a corresponding tensor computation dimension is UB. Therefore, the 3^{rd} operation is mapped to a UB storage node in the tree topology.

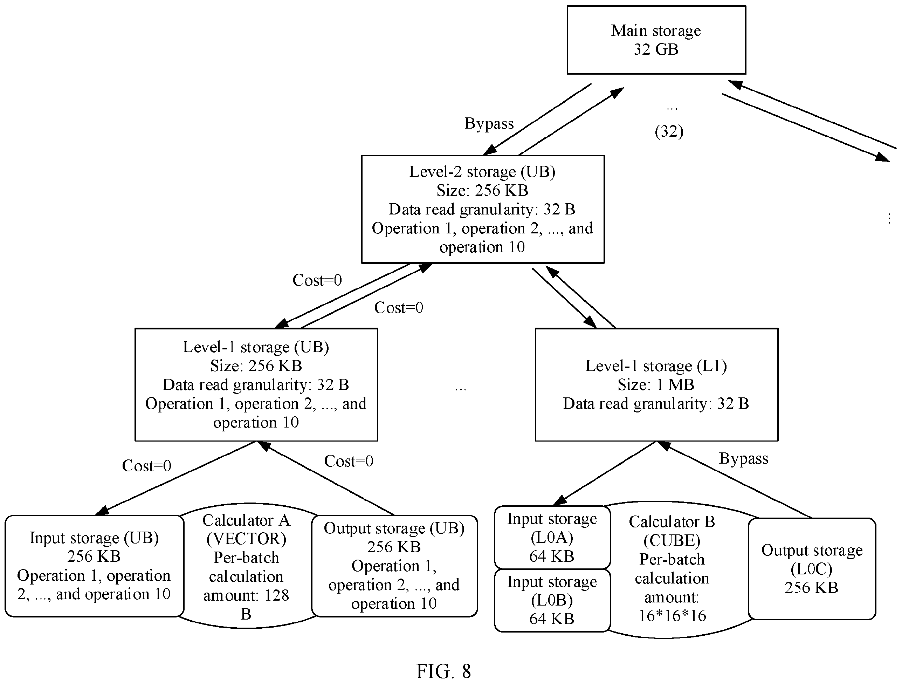

In the nested loop representation, storage labels of dimensions corresponding to remaining operations are all UB. Therefore, the remaining operations are mapped to UB storage nodes in the tree topology. For a tree topology diagram obtained after tensor operations are mapped, refer to FIG. 8.

Reuse analysis is performed on tensor operations on each node.

For example, dependency relationship analysis is performed on inputs and outputs of all tensor operations on each storage (or a maximum quantity of tensor operations that exist simultaneously on each storage node is obtained by using another method):

On a main storage node, there is no mapped tensor operation.

On a level-2 storage UB node, tensor operations obtained from a nested loop representation are as follows:
Operation 1: Data is read from the main storage to UB.
Operation 2: Data is read from the main storage to the UB.
Operation 3: The data read in the operation 1 is subtracted from the data read in the operation 2, and a result is stored in the UB.
Operation 4: Data is read from the main storage to the UB.
Operation 5: A result of the operation 3 is multiplied by the data read in the operation 4, and a result is stored in the UB.
Operation 6: Data is read from the main storage to the UB.
Operation 7: A result of the operation 5 is multiplied by the data read in the operation 6, and a result is stored in the UB.
Operation 8: Data is read from the main storage to the UB.
Operation 9: A result of the operation 7 is added with the data read in the operation 8, and a result is stored in the UB.
Operation 10: A data type of the result of the operation 9 is converted, and a result is stored in the UB.

Analysis of the operation 1: The operation 1 is a 1^{st} operation. Therefore, the operation 1 is reserved.

Analysis of the operation 2: A result of the operation 1 needs to be reserved to be used in the operation 3. Therefore, space occupied in the operation 1 cannot be reused in the operation 2, and the operation 2 is reserved.

Analysis of the operation 3: The result of the operation 1 is no longer used, and space occupied by the result of the operation 1 is the same as space occupied by an input of the operation 3. Therefore, an output of the operation 3 may reuse the space occupied by the result of the operation 1, and operation 1 is removed.

Analysis of the operation 4: A result of the operation 2 is no longer used, and space occupied in the operation 4 is the same as the space occupied in the operation 2. Therefore, space occupied in the operation 2 may be reused in the operation 4, and the operation 2 is removed.

Analysis of the operation 5: The result of the operation 3 is no longer used, and space occupied by the result of the operation 3 is the same as space occupied by an input of the operation 5. Therefore, an output of the operation 5 may reuse the space occupied by the result of the operation 3, and the operation 3 is removed.

Analysis of the operation 6: A result of the operation 4 is no longer used, and space occupied in the operation 6 is the same as the space occupied in the operation 4. Therefore, the space occupied in the operation 4 may be reused in the operation 6, and the operation 4 is removed.

Analysis of the operation 7: The result of the operation 5 is no longer used, and space occupied by the result of the operation 5 is the same as space occupied by an input of the operation 7. Therefore, an output of the operation 7 may reuse the space occupied by the result of the operation 5, and the operation 5 is removed.

Analysis of the operation 8: A result of the operation 6 is no longer used, and space occupied in the operation 8 is the same as the space occupied in the operation 6. Therefore, the space occupied in the operation 6 may be reused in the operation 8, and the operation 6 is removed.

Analysis of the operation 9: The result of the operation 7 is no longer used, and space occupied by the result of the operation 7 is the same as space occupied by an input of the operation 9. Therefore, an output of the operation 9 may reuse the space occupied by the result of the operation 7, and the operation 7 is removed.

Analysis of the operation 10: A result of the operation 8 is no longer used, and space occupied by the result of the operation 8 is the same as space occupied by an input of the operation 10. Therefore, an output of the operation 10 may reuse the space occupied by the result of the operation 8, and the operation 8 is removed.

Finally, only the operation 9 and the operation 10 are retained on the level-2 storage UB node.

A level-1 storage UB node is equivalent to a level-2 storage UB node.

On a level-1 storage L1 node, there is no mapped tensor operation.

An input storage and an output storage of a VECTOR calculator are equivalent to the level-1 storage UB node.

On an input storage and an output storage of a CUBE calculator, there is no tensor operation mapped.

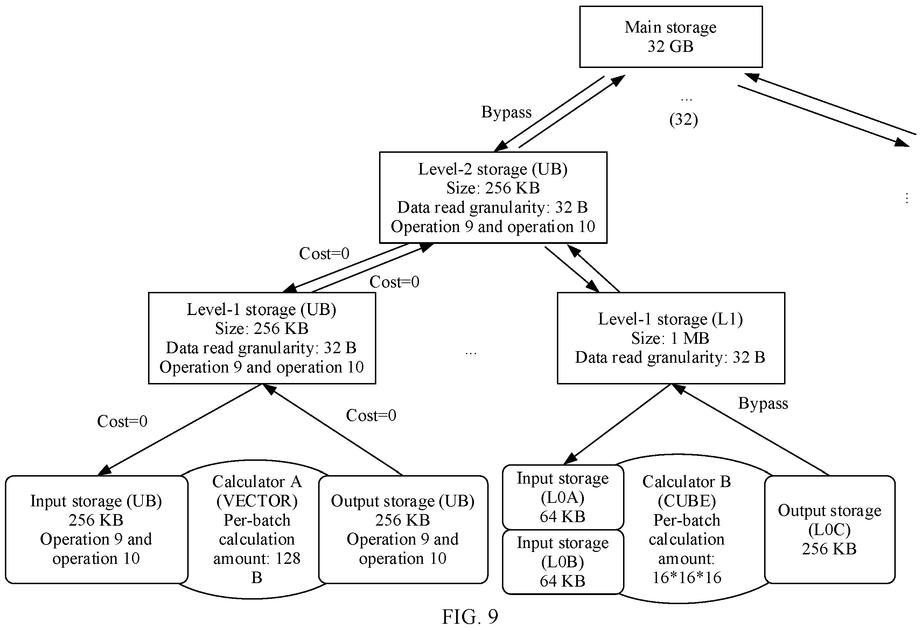

For a diagram of a tree topology obtained after tensor operations are mapped and after reuse analysis is performed, refer to FIG. 9.

A tiling strategy of a tensor computation axis corresponding to each node is generated based on a sequence of the tree topology.

For a main storage layer, a root node represents all storage space of a hardware accelerator, and the storage space does not need to be tiled.

For a level-2 storage layer, the level-2 storage layer includes a plurality of level-2 storage UB nodes, and an available storage size is generated after a tensor operation is mapped on a storage node in the tree topology. There are only two operations (an operation 9 and an operation 10) on the level-2 storage UB node, and axes corresponding to the two operations are ax0 and ax1. Therefore, ax0 and ax1 each may use half of a storage size of UB, namely, 256 KB/2=128 KB (refer to FIG. 10).

The available storage size is adjusted based on sibling node information in the tree topology. A current node in the tree topology has 32 sibling nodes of a same type, a size of tensor operation data is 6144*1024, and the 32 sibling nodes may be invoked. Therefore, a new available storage size 128 KB/32=4 KB is obtained by dividing the available storage size 128 KB by 32 (refer to FIG. 11).

A tiling strategy is generated based on a characteristic description of a node in the tree topology. The current node is a level-2 storage UB node, and a node characteristic is that a data read granularity is equal to 32 B. A priority of an axis ax0 is higher than that of an axis ax1. Therefore, a tiling strategy is preferentially generated for the axis ax0, and the axis ax0 is selected to meet the data read granularity of the UB. Therefore, the tiling strategy of the axis ax0 is set to 32 B/4 B=8 (32 B is the data read granularity of the node, and 4 B is a size of a data type float32). The axis ax1 uses a maximized-size tiling strategy 4*1024 B/4 B/8=128 (refer to FIG. 12).

For a level-1 storage UB at a level-1 storage layer, an attribute of an edge between the level-1 storage UB and a level-2 storage UB is that cost is equal to 0. Therefore, the level-1 storage UB and the level-2 storage UB are equivalent, and a same tiling strategy is used.

For a level-1 storage L1 at the level-1 storage layer, there is no mapping of a tensor operation. Therefore, there is no corresponding axis, and tiling does not need to be performed.

For a computing layer, a node that has a tensor operation mapped is a VECTOR calculator node, but a CUBE calculator node does not have a tensor operation mapped. Therefore, only the VECTOR calculator node needs to be analyzed to determine a tiling strategy of a tensor computation axis corresponding to the VECTOR calculator node.

An available storage size is generated after a tensor operation is mapped on a storage node in the tree topology. An input storage and an output storage of VECTOR and the level-1 storage UB (cost=0) are equivalent, and therefore have a same available storage size.

The available storage size is adjusted based on sibling node information in the tree topology. A current node does not have sibling nodes. Therefore, the available storage size is not adjusted.

A strategy is optimized based on a characteristic description of a node in the tree topology. The current node is a VECTOR node, and a node characteristic is that a per-batch calculation amount is equal to 128 B. An axis ax1 is selected based on default priorities (where a priority of the axis ax1 is higher than that of an axis ax0) to meet the per-batch calculation amount of the VECTOR. Therefore, a tiling strategy of the axis ax1 needs to be a multiple of 128 B/4 B=32. A current tiling strategy of the axis ax1 is 256 that is a multiple of 32 and that meets the per-batch calculation amount. Therefore, the tiling strategy does not need to be adjusted. Therefore, a final tiling strategy of tensor computation is that the tiling strategy of the axis ax0 is 8, and the tiling strategy of the axis ax1 is 128 (refer to FIG. 13).

It may be understood that the tiling strategy of the axis ax0 is 8 indicates that every eight elements in the axis ax0 are tiled into a block. For example, if a length of the axis ax0 is 6144, and the tiling strategy is 8, a quantity of blocks of the axis ax0 is 6144/8=768, and a size of each block is 8. The tiling strategy of the axis ax1 is 128 indicates that every 128 elements in the axis ax1 are tiled into a block. For example, if a length of the axis ax1 is 1024, and the tiling strategy is 128, a quantity of blocks of the axis ax1 is 1024/128=8, and a size of each block is 128.

The following uses an example in which a hardware accelerator is Ascend 910 and a computational graph is obtained by fusing a vector operator and a matrix multiplication operator, to describe a specific implementation of the method for generating a tiling strategy for tensor computation provided in embodiments of this application.

A nested loop representation of the tensor computation, namely, a description of each operation of the tensor computation in a computational graph in which the vector operator and the matrix multiplication operator are fused is obtained, including an operation type and corresponding information. The obtained nested loop representation of the tensor computation is as follows:

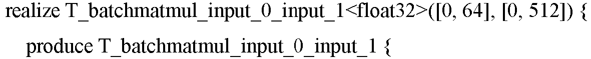

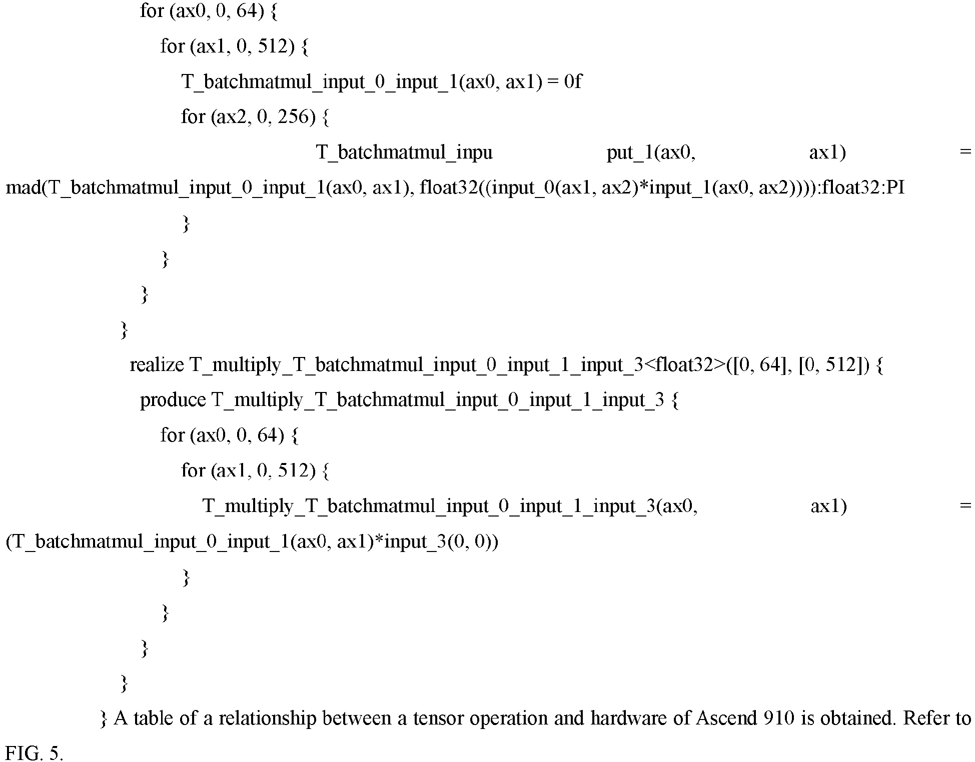

For a tree topology constructed after hardware information abstraction of Ascend 910, refer to the foregoing description. For brevity, details are not described herein again.

Information about tensor operation is extracted from the nested loop representation, and includes a corresponding axis, an axis length, a data type, and a corresponding hardware label.

In the nested loop representation, a 1^{st} operation is reading data from a main storage to L1 and then to L0A. Corresponding dimensions are ax1 and ax2, lengths are 512 and 256, and a data type is float16. Corresponding storage hardware being L1 and LOA can be found in the table of a relationship between a tensor operation and hardware of Ascend 910. The information is stored in axis information.

In the nested loop representation, a 2^{nd} operation is reading data from the main storage to L1 and to L0B. Corresponding dimensions are ax0 and ax2, lengths are 64 and 256, and a data type is float16. Corresponding storage hardware being L1 and LOB can be found in the table of a relationship between a tensor operation and hardware of Ascend 910. The information is stored in axis information.

In the nested loop representation, a 3^{rd} operation is performing matrix multiplication on the data of LOA and the data of L0B, read result data to L0C, and then read the result data to UB. Corresponding dimensions are ax0, ax1, and ax2 (corresponding dimensions for reading data to the UB are ax0 and ax1). Lengths are 64, 512, and 256, respectively. A data type is float16. Corresponding storage hardware being LOC and the UB and corresponding computing hardware and CUBE can be found in the table of a relationship between a tensor operation and hardware of Ascend 910. The information is stored in axis information.

In the nested loop representation, a 4^{th} operation is reading data from the main storage to the UB. Corresponding dimensions are ax0 and ax1, lengths are respectively 64 and 512, and a data type is float16. Corresponding storage hardware being UB can be found in the table of a relationship between a tensor operation and hardware of Ascend 910. The information is stored in axis information.

In the nested loop representation, a 5^{th} operation is performing vector multiplication on the data in the UB. Corresponding dimensions are ax0 and ax1, lengths are 64 and 512, and a data type is float16. Corresponding storage hardware and computing hardware being a VECTOR can be found in the table of a relationship between a tensor operation and hardware of Ascend 910. The information is stored in the axis information.

For obtained tensor computation axis information, refer to FIG. 14.

A tensor operation is mapped to a tree topology with a hardware label.

In the nested loop representation, storage labels of dimensions (ax1, and ax2) corresponding to the 1^{st} operation are UB, L1, L0A, L0B, and L0C. Therefore, the 1^{st} operation is mapped to a corresponding storage node in the tree topology.

In the nested loop representation, storage labels of dimensions (ax0, and ax2) corresponding to the 2^{nd} operation are UB, L1, L0A, L0B, and L0C. Therefore, the 2^{nd} operation is mapped to a corresponding storage node in the tree topology.

In the nested loop representation, storage labels of dimensions (ax0, ax1, and ax2) corresponding to the 3^{rd} operation are UB, L1, L0A, L0B, and L0C. Therefore, the 3^{rd} operation is mapped to a corresponding storage node in the tree topology.

In the nested loop representation, storage labels of dimensions (ax0, and ax1) corresponding to the 4^{th} operation are UB, L1, L0A, L0B, and L0C. Therefore, the 4^{th} operation is mapped to a corresponding storage node in the tree topology.

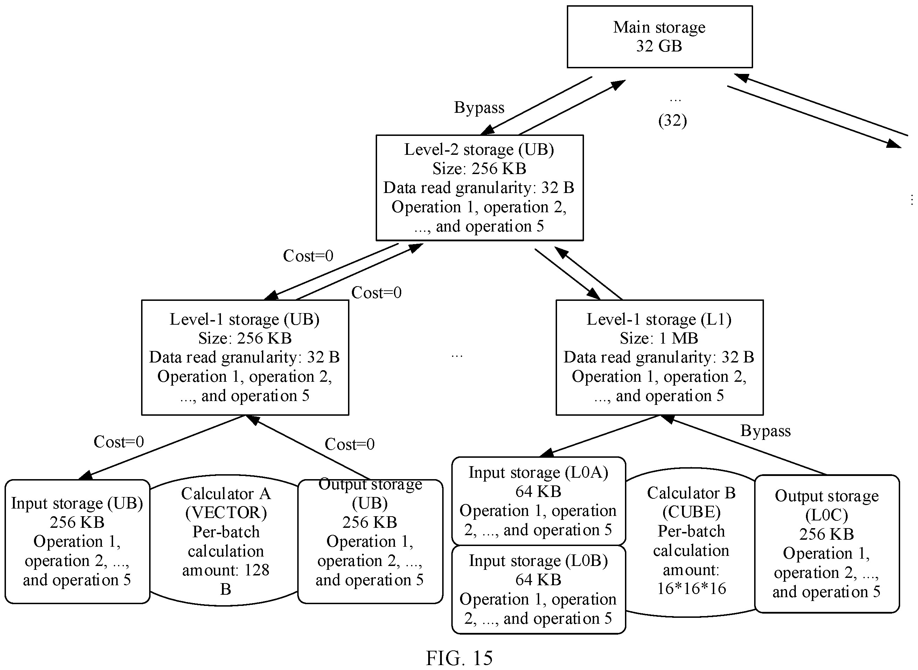

In the nested loop representation, storage labels of dimensions (ax0, and ax1) corresponding to the 5^{th} operation are UB, L1, L0A, L0B, and L0C. Therefore, the 5^{th} operation is mapped to a corresponding storage node in the tree topology. For a tree topology diagram obtained after tensor operations are mapped, refer to FIG. 15.

Reuse analysis is performed on tensor operations on each node.

For example, dependency relationship analysis is performed on inputs and outputs of all tensor operations on each storage (or a maximum quantity of tensor operations that exist simultaneously on each storage node is obtained by using another method):

On a main storage node, there is no mapped tensor operation.

On a level-2 storage UB node, tensor operations obtained from a nested loop representation are as follows:
Operation 1: Data is read from the main storage to L1 and then to L0A.
Operation 2: Data is read from the main storage to L1 and then to L0B.
Operation 3: Matrix multiplication is performed on the data read in the operation 1 and the data read in the operation 2, and a result is read to LOC and then to the UB.
Operation 4: Data is read from the main storage to the UB.
Operation 5: A result of the operation 3 is multiplied by the data read in the operation 4.

Analysis of the operation 1: The operation 1 does not involve the level-2 storage UB node, and the operation 1 is removed.

Analysis of the operation 2: The operation 2 does not involve the level-2 storage UB node, and the operation 2 is removed.

Analysis of the operation 3: The operation 3 is a 1^{st} operation on the level-2 storage UB node. Therefore, the operation 3 is reserved.

Analysis of the operation 4: A result of the operation 3 needs to be reserved to be used in the operation 5. Therefore, space occupied in the operation 3 cannot be reused in the operation 4, and the operation 4 is reserved.

Analysis of the operation 5: A result of the operation 3 is no longer used, and space occupied by the result of operation 3 is the same as space occupied by an input of the operation 5. Therefore, an output of the operation 5 may reuse the space occupied in the operation 3, and the operation 3 is removed.

A level-1 storage UB node is equivalent to the level-2 storage UB node.

Operations performed on the level-1 storage L 1 node are as follows:
Operation 1: Data is read from the main storage to L1 and then to L0A.
Operation 2: Data is read from the main storage to L1 and then to L0B.
Operation 3: Matrix multiplication is performed on the data read in the operation 1 and the data read in the operation 2, and a result is read to LOC and then to the UB.
Operation 4: Data is read from the main storage to the UB.
Operation 5: A result of the operation 3 is multiplied by the data read in the operation 4.

Analysis of the operation 1: The operation 1 is a 1^{st} operation on the level-1 storage L1 node. Therefore, the operation 1 is reserved.

Analysis of the operation 2: A result of the operation 1 needs to be reserved to be used in the operation 3. Therefore, space occupied in the operation 1 cannot be reused in the operation 2, and the operation 2 is reserved.

Analysis of the operation 3: The operation 3 does not involve the level-1 storage L1 node, and the operation 3 is removed.

Analysis of the operation 4: The operation 4 does not involve the level-1 storage L1 node, and the operation 4 is removed.

Analysis of the operation 5: The operation 5 does not involve the level-1 storage L1 node, and the operation 5 is removed.

An input storage and an output storage of a VECTOR calculator are equivalent to the level-1 storage UB node.

Operations performed on an input storage LOA of the CUBE calculator are as follows:
Operation 1: Data is read from the main storage to L1 and then to L0A.
Operation 2: Data is read from the main storage to L1 and then to L0B.
Operation 3: Matrix multiplication is performed on the data read in the operation 1 and the data read in the operation 2, and a result is read to LOC and then to the UB.
Operation 4: Data is read from the main storage to the UB.
Operation 5: A result of the operation 3 is multiplied by the data read in the operation 4.

Analysis of the operation 1: The operation 1 is a 1^{st} operation on the input storage LOA of the CUBE calculator. Therefore, the operation 1 is reserved.

Analysis of the operation 2: The operation 2 does not involve the input storage LOA of the CUBE calculator, and the operation 2 is removed.

Analysis of the operation 3: The operation 3 does not involve the input storage LOA of the CUBE calculator, and the operation 3 is removed.

Analysis of the operation 4: The operation 4 does not involve the input storage LOA of the CUBE calculator, and the operation 4 is removed.

Analysis of the operation 5: The operation 5 does not involve the input storage LOA of the CUBE calculator, and the operation 5 is removed.

Operations performed on an input storage LOB of the CUBE calculator are as follows:
Operation 1: Data is read from the main storage to L1 and then to L0A.
Operation 2: Data is read from the main storage to L1 and then to L0B.
Operation 3: Matrix multiplication is performed on the data read in the operation 1 and the data read in the operation 2, and a result is read to LOC and then to the UB.
Operation 4: Data is read from the main storage to the UB.
Operation 5: A result of the operation 3 is multiplied by the data read in the operation 4.

Analysis of the operation 1: The operation 1 does not involve the input storage LOB of the CUBE calculator, and the operation 1 is removed.

Analysis of the operation 2: The operation 2 is a 1^{st} operation on the input storage LOB of the CUBE calculator. Therefore, the operation 2 is reserved.

Analysis of the operation 3: The operation 3 does not involve the input storage LOB of the CUBE calculator, and the operation 3 is removed.

Analysis of the operation 4: The operation 4 does not involve the input storage LOB of the CUBE calculator, and the operation 4 is removed.

Analysis of the operation 5: The operation 5 does not involve the input storage LOB of the CUBE calculator, and the operation 5 is removed.

Operations performed on an output storage LOC of the CUBE calculator are as follows:
Operation 1: Data is read from the main storage to L1 and then to L0A.
Operation 2: Data is read from the main storage to L1 and then to L0B.
Operation 3: Matrix multiplication is performed on the data read in the operation 1 and the data read in the operation 2, and a result is read to LOC and then to the UB.
Operation 4: Data is read from the main storage to the UB.
Operation 5: A result of the operation 3 is multiplied by the data read in the operation 4.

Analysis of the operation 1: The operation 1 does not involve the output storage LOC of the CUBE calculator, and the operation 1 is removed.

Analysis of the operation 2: The operation 1 does not involve the output storage LOC of the CUBE calculator, and the operation 1 is removed.

Analysis of the operation 3: The operation 3 is a 1^{st} operation on the output storage LOC of the CUBE calculator. Therefore, the operation 3 is reserved.

Analysis of the operation 4: The operation 4 does not involve the output storage LOC of the CUBE calculator, and the operation 4 is removed.

Analysis of the operation 5: The operation 5 does not involve the output storage LOC of the CUBE calculator, and the operation 5 is removed.

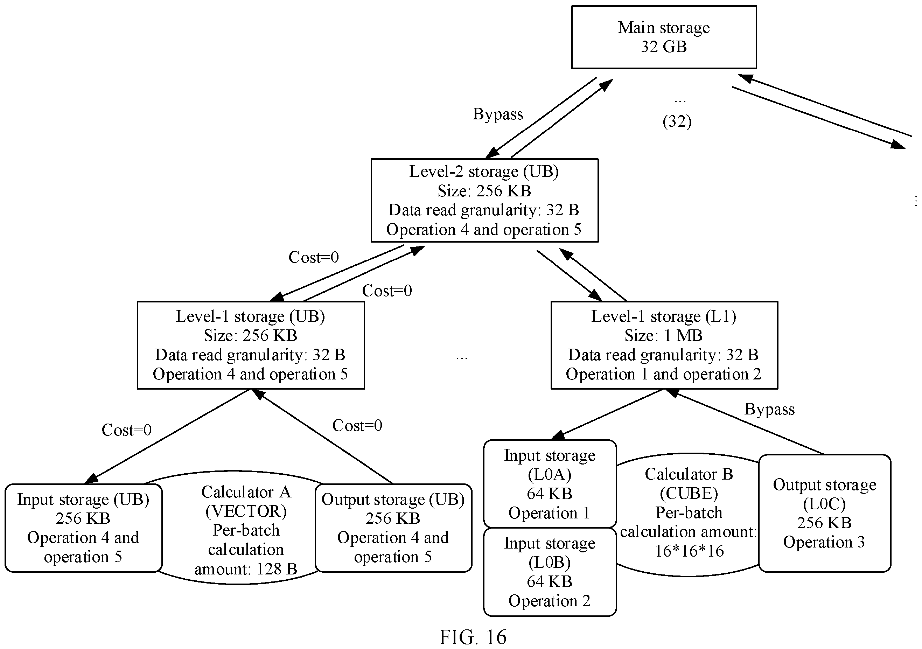

For a diagram of a tree topology obtained after tensor operations are mapped and after reuse analysis, refer to FIG. 16.

A tiling strategy of a tensor computation axis corresponding to each node is generated based on a sequence of the tree topology.

For a main storage layer, a root node represents all storage space of a hardware accelerator, and the storage space does not need to be tiled.

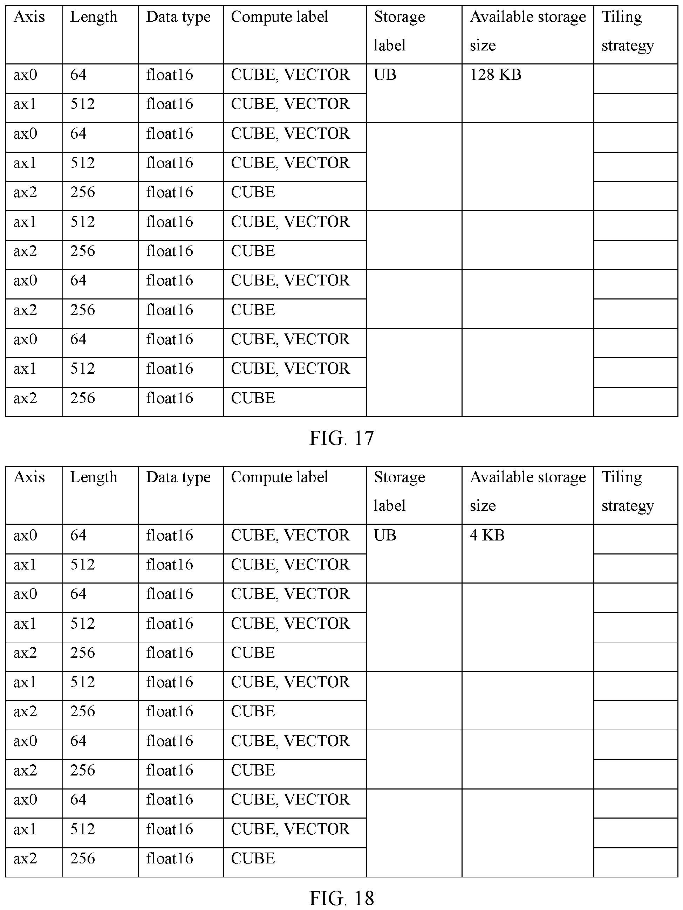

For a level-2 storage layer, the level-2 storage layer includes a plurality of level-2 storage UB nodes, and an available storage size is generated after a tensor operation is mapped on a storage node in the tree topology. There are two operations (an operation 4 and an operation 5) on the level-2 storage UB node, and an available storage size of each operation is 256 KB/2=128 KB. In the operation 4 and the operation 5, tensor computation axes that need to be tiled on the storage UB node are both ax0 and ax1. Therefore, available storage sizes of the axis ax0 and the axis ax1 on the storage UB node are both 128 B (refer to FIG. 17).

The available storage size is adjusted based on sibling node information in the tree topology. A current node in the tree topology has 32 sibling nodes of a same type, a size of tensor operation data is 64*512, and the 32 sibling nodes may be invoked. Therefore, a new available storage size 128 KB/32=4 KB is obtained by dividing the available storage size by 32 (refer to FIG. 18).

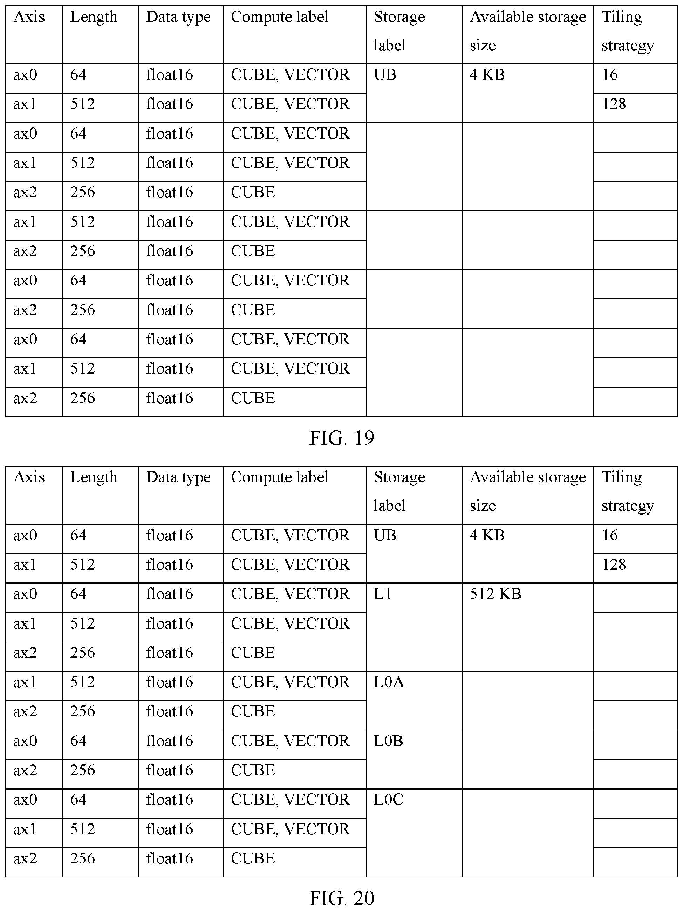

A strategy is optimized based on a characteristic description of a node in the tree topology. The current node is a level-2 storage UB node, and a node characteristic is that a data read granularity is equal to 32 B. The axis ax0 is selected to meet the data read granularity of the UB based on default priorities (where a priority of the axis ax0 is higher than that of the axis ax1). Therefore, a tiling strategy of the axis ax0 is set to 32 B/2 B=16 (32 B is the data read granularity of the node, and 2 B is a size of a data type float16). The axis ax1 uses a maximized-size tiling strategy 4*1024 B/2 B/16=128 (refer to FIG. 19).

For a level-1 storage UB at a level-1 storage layer, an attribute of an edge between the level-1 storage UB and a level-2 storage UB is that cost is equal to 0. Therefore, the level-1 storage UB and the level-2 storage UB are equivalent, and a same tiling strategy is used.

For a level-1 storage L1 at the level-1 storage layer, an available storage size is generated after a tensor operation is mapped on a storage node in the tree topology. There are two operations (an operation 1 and an operation 2) on the level-1 storage L1 node. Therefore, each of the two operations can use half of storage space of L1 (1 MB/2=512 KB).

In the operation 1, axes that need to be tiled on L1 are ax0, ax1, and ax2. Therefore, an available storage size of each of ax0, ax1, and ax2 on L1 is 512 KB (refer to FIG. 20).

The available storage size is adjusted based on sibling node information in the tree topology. The current node does not have sibling nodes. Therefore, the storage size is not adjusted.

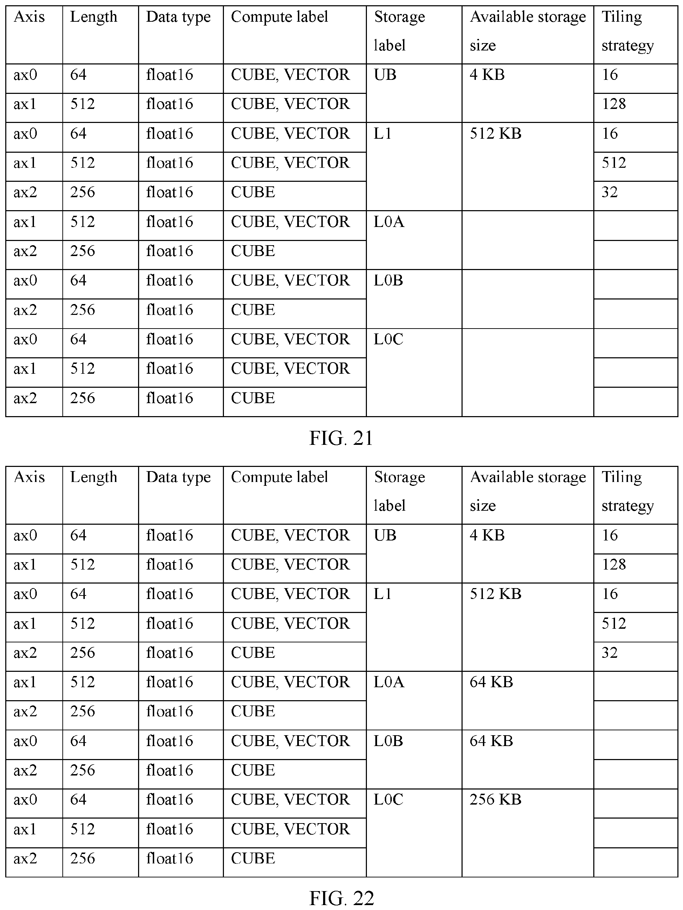

A strategy is optimized based on a characteristic description of a node in the tree topology. The current node is a level-1 storage L1 node, and a node characteristic is that a data read granularity is equal to 32 B. The axis ax0 is selected based on a default priority to meet the data read granularity of L1. Therefore, a tiling strategy of ax0 is set to 32 B/2 B=16 (a data size of fp16 is 2 B). The axis ax1 uses a maximized-size tiling strategy 512 (reaching a maximum axis length), and the axis ax2 uses a maximized-size tiling strategy 64 (512*1024 B/2 B/16/512=32) (refer to FIG. 21).

For a computing layer, both a VECTOR calculator node and a CUBE calculator node have a mapped tensor operation. Therefore, analysis needs to be performed on both the VECTOR calculator node and the CUBE calculator node to determine tiling strategies for tensor computation axes corresponding to the VECTOR calculator node and the CUBE calculator node.

For the VECTOR calculator node,
an available storage size is generated after a tensor operation is mapped on a storage node in the tree topology. An input storage and an output storage of the VECTOR calculator node and the level-1 storage UB (cost=0) are equivalent, and a same tiling strategy is used.

The available storage size is adjusted based on sibling node information in the tree topology. The current node does not have sibling nodes. Therefore, the storage size is not adjusted.

A strategy is optimized based on a characteristic description of a node in the tree topology. The current node is a VECTOR calculator node, and a node characteristic is that a calculation granularity is equal to 128 B. In axes corresponding to a label UB, the axis ax1 is selected based on a default priority to meet a per-batch calculation amount of the VECTOR calculator node. Therefore, a tiling strategy of ax1 needs to be a multiple of 128 B/4 B=32. The tiling strategy of the axis ax1 on the UB is 128 that is a multiple of 32 and that meets the calculation granularity. Therefore, the tiling strategy is not adjusted.

For the CUBE calculator node,
an available storage size is generated after a tensor operation is mapped on a storage node in the tree topology.

For an input storage L0A, there is only one operation (an operation 1) in the input storage L0A. Therefore, the operation can use all storage (64 KB) of L0A.

For an input storage L0B, there is only one operation (an operation 2) in the input storage L0B. Therefore, the operation can use all storage (64 KB) of L0B.

For an output storage L0C, there is only one operation (an operation 3) in the output storage L0C. Therefore, the operation can use all storage (256 KB) of LOC (refer to FIG. 22).

The available storage size is adjusted based on sibling node information in the tree topology. The current node does not have sibling nodes. Therefore, the storage size is not adjusted.

A strategy is optimized based on a characteristic description of a node in the tree topology. The current node is a CUBE calculator node, and a node characteristic is that a per-batch calculation amount is 16:16:16. Three axes ax0, ax1, and ax2 related to the input storage LOA and LOB are allocated with tiling strategies that are same multiples of 16. An available storage size is allocated in a same proportion to obtain a tiling strategy that is 2√(64*1024 B/2 B)=181, and then a maximum multiple of 16 that is less than 181 is found: 176. Therefore, tiling strategies of the three axes on LOA and LOB are all 176.

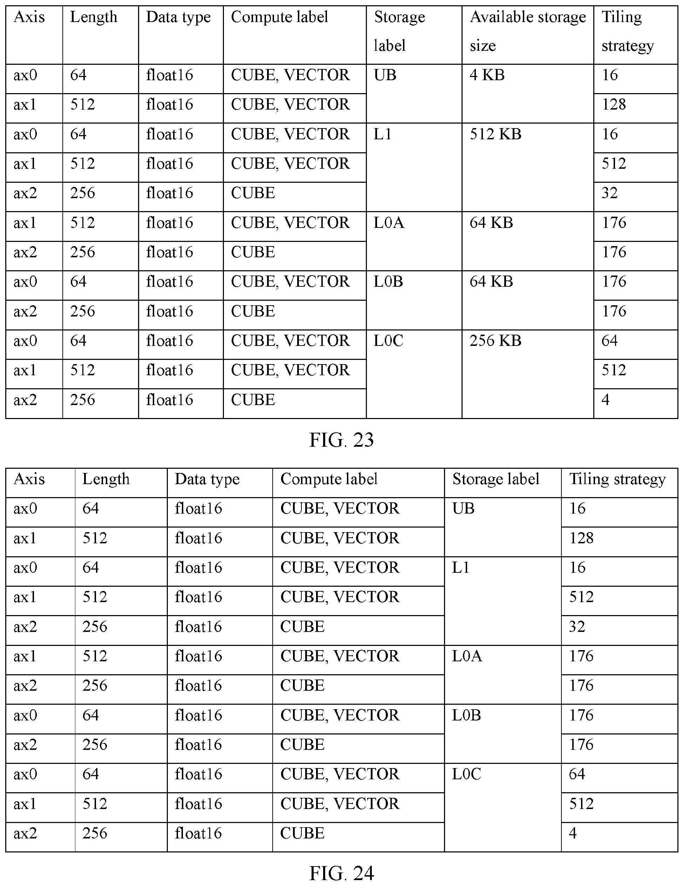

The output storage LOC does not have a tiling strategy, and maximized-size tiling strategies are generated for the output storage L0C. Tiling strategies of ax0, ax1, and ax2 in LOC are 64 (reaching a maximum axis length), 512 (reaching a maximum axis length), and 4 (=256*1024 B/2 B/64/512, where a maximized-size tiling strategy that does not exceed a storage size may be obtained by dividing the storage size by a data type and by used tiling strategies) (refer to FIG. 23).

For a final tiling strategy, refer to FIG. 24.

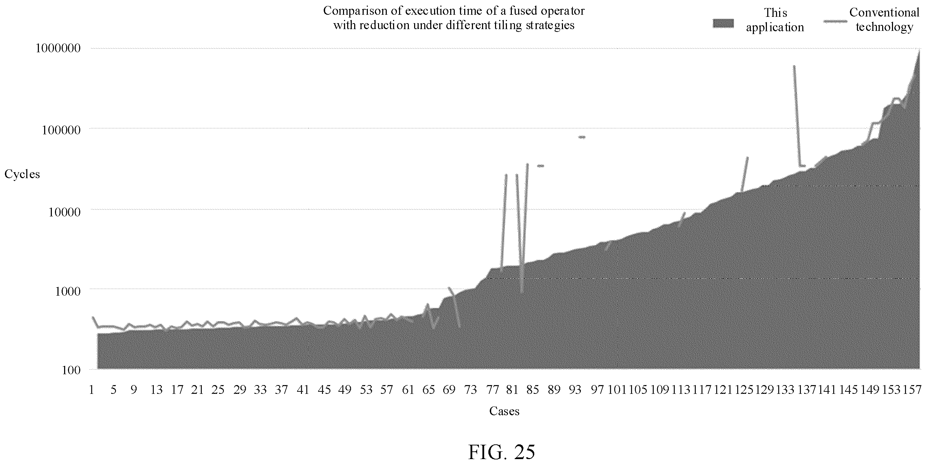

According to the method for generating a tiling strategy for tensor computation provided in embodiments of this application, a storage size of each level of storage unit and per-batch amounts of a storage unit and a computing unit are considered. This ensures validity of a tiling strategy. For example, in a reduction (reduction) operation, computation of elements of an input tensor depends on each other, and both a per-batch amount of each hardware unit and available space of a storage unit need to be considered. In 159 comparison examples that are of fused operators including reduction and that are selected by MindSpore in practice, according to the method for generating a tiling strategy for tensor computation provided in embodiments of this application, tiling strategies in all examples are successfully generated, and some of the tiling strategies have higher performance than those in examples successfully processed in the conventional technology (refer to FIG. 25).

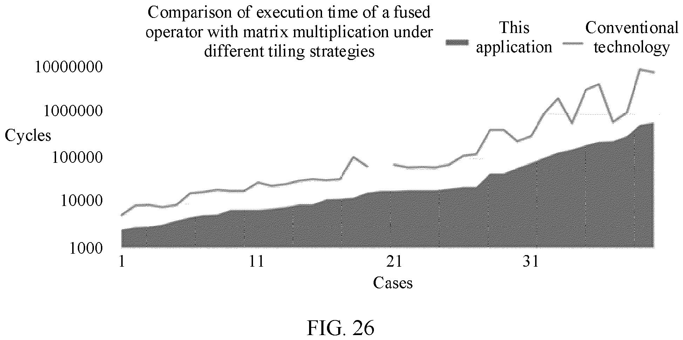

According to the method for generating a tiling strategy for tensor computation provided in embodiments of this application, tiling strategies of axes are progressively adapted to characteristics of required hardware. Quality of the tiling strategy is ensured, and code generated based on the method for generating a tiling strategy for tensor computation provided in embodiments of this application has excellent performance. In 40 comparison examples of fused operators including matrix multiplication selected by MindSpore in practice, an execution speed of code generated by using a tiling strategy generated by using the method for generating a tiling strategy for tensor computation provided in embodiments of this application is obviously higher than an execution speed of code generated by using the conventional technology. In addition, for an example in which there is no successful processing in the conventional technology, an excellent tiling strategy is also successfully generated in the present invention (refer to FIG. 26).

Based on a same concept as the foregoing embodiment of the method for generating a tiling strategy for tensor computation, an embodiment of this application further provides an apparatus 2700 for generating a tiling strategy for tensor computation. The apparatus 2700 for generating a tiling strategy for tensor computation includes units or modules configured to implement steps in the method for generating a tiling strategy for tensor computation shown in FIG. 2a.

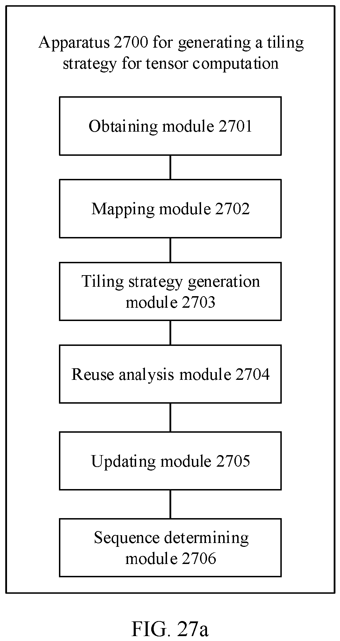

FIG. 27a is a diagram of a structure of an apparatus for generating a tiling strategy for tensor computation according to an embodiment of this application. The apparatus is applied to a computing device. As shown in FIG. 27a, the apparatus 2700 for generating a tiling strategy for tensor computation includes at least:
an obtaining module 2701, configured to: obtain information about each tensor operation corresponding to tensor computation, where the information about the tensor operation includes a corresponding tensor computation dimension, a quantity of elements in the tensor computation dimension, a data type of an element, an operation type, and a hardware label, and the hardware label represents a hardware unit on which the operation type depends; and
obtain a topology corresponding to a hardware accelerator, where the hardware accelerator is configured to accelerate the tensor computation, the topology includes a plurality of nodes, and the nodes represent hardware units related to the tensor computation;
a mapping module 2702, configured to map each tensor operation to a corresponding node based on the operation type and the hardware label; and
a tiling strategy generation module 2703, configured to: obtain, based on characteristic information of a hardware unit corresponding to a node, allocated storage space of the hardware unit, and the data type of the element corresponding to the tensor computation dimension corresponding to the tensor operation, a tiling strategy for the tensor computation dimension corresponding to the tensor operation corresponding to the node, where the allocated storage space of the hardware unit is obtained based on storage space of the hardware unit and a quantity of tensor operations corresponding to the node; and
obtain, based on a tiling strategy of each tensor computation dimension, the tiling strategy for the tensor computation.

In a possible implementation, the topology further includes a plurality of connection edges, the connection edge is used to connect different nodes, and the connection edges represent relationships between the nodes; and
the tiling strategy of the tensor computation dimension corresponding to the node is further related to a connection edge corresponding to the node.

In another possible implementation, the connection edge is a unidirectional edge, the unidirectional edge has an attribute, and the attribute is a first attribute or a second attribute or a third attribute, where
the first attribute represents that the tiling strategy of the tensor computation dimension corresponding to the node to which the unidirectional edge points is determined based on the characteristic information of the hardware unit corresponding to the node, the allocated storage space of the hardware unit, and the data type of the element corresponding to the tensor computation dimension corresponding to the tensor operation;
the second attribute represents that the tiling strategy of the tensor computation dimension corresponding to the node to which the unidirectional edge points is the same as a tiling strategy of a tensor computation dimension corresponding to another node connected to the unidirectional edge; and
the third attribute represents that a tiling strategy does not need to be determined for the tensor computation dimension corresponding to the node to which the unidirectional edge points.

In another possible implementation, the apparatus further includes:
a reuse analysis module 2704, configured to perform memory reuse analysis on a tensor operation corresponding to each node; and
an updating module 2705, configured to update, based on a memory reuse analysis result, a quantity of tensor operations corresponding to each node.

In another possible implementation, the topology is a tree topology, the plurality of nodes include a root node, a branch node, and a leaf node, the root node and the branch node represent hardware units used for storage, and the leaf node represents a hardware unit used for computation.

The apparatus further includes:
a sequence determining module 2706, configured to: obtain a sequence of the plurality of nodes based on the tree topology; and
sequentially determine, based on the sequence of the plurality of nodes, the tiling strategy of the tensor computation dimension corresponding to the node.

In another possible implementation, the allocated storage space of the hardware unit corresponding to the node is further related to a quantity of available sibling nodes corresponding to the node.

In another possible implementation, the tensor computation dimension corresponding to the node includes a first tensor computation dimension and a second tensor computation dimension, and a priority of the first tensor computation dimension is higher than a priority of the second tensor computation dimension; and
the tiling strategy generation module 2703 is specifically configured to:
obtain a tiling strategy of the first tensor computation dimension based on the characteristic information of the hardware unit corresponding to the node and a data type of an element corresponding to the first computation dimension; and
determine a tiling strategy of the second tensor computation dimension based on the allocated storage space of the hardware unit and the tiling strategy of the first tensor computation dimension.

In another possible implementation, the hardware unit includes a storage unit and a computing unit, a characteristic of the storage unit includes a storage granularity, and a characteristic of the computing unit includes a per-batch calculation amount.

In another possible implementation, the obtaining module 2701 is specifically configured to:
obtain, based on an intermediate representation corresponding to the tensor computation and a table of a relationship between the tensor computation and the hardware accelerator, information about each computation dimension corresponding to the tensor computation, where
the intermediate representation corresponding to the tensor computation includes an element quantity corresponding to each computation dimension corresponding to the tensor computation, the data type of the element, and the operation type; and the table of the relationship between the tensor computation and the hardware accelerator includes a correspondence between the operation type and each hardware unit in the hardware accelerator.

In another possible implementation, the hardware accelerator is of a heterogeneous structure.

The apparatus 2700 for generating a tiling strategy for tensor calculation according to embodiments of this application may correspondingly perform the method described in embodiments of this application. In addition, the foregoing and other operations and/or functions of the modules in the apparatus 2700 for generating a tiling strategy for tensor calculation are separately used to implement each corresponding procedure of the method in FIG. 2a. For brevity, details are not described herein again.

Based on a same concept as the foregoing embodiment of the method for generating a tiling strategy for tensor computation, an embodiment of this application further provides another apparatus 3700 for generating a tiling strategy for tensor computation. The apparatus 3700 for generating a tiling strategy for tensor computation includes units or modules configured to implement steps in the method for generating a tiling strategy for tensor computation shown in FIG. 2b.

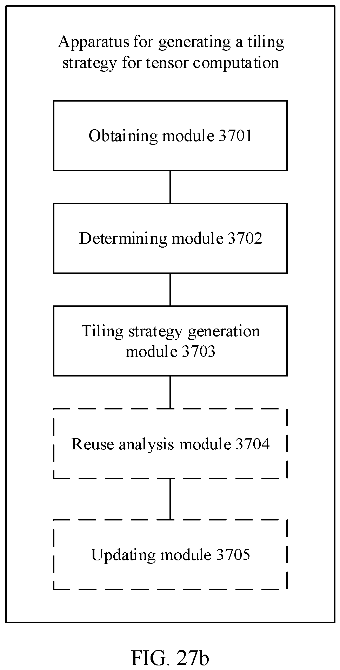

FIG. 27b is a diagram of a structure of an apparatus for generating a tiling strategy for tensor computation according to an embodiment of this application. The apparatus is applied to a computing device. As shown in FIG. 27b, the apparatus 3700 for generating a tiling strategy for tensor computation includes at least:
an obtaining module 3701, configured to obtain information about a plurality of tensor operations corresponding to tensor computation, where information about each tensor operation includes a tensor computation dimension corresponding to the tensor operation, a data type of an element corresponding to the tensor computation dimension, and a priority of the tensor computation dimension;
a determining module 3702, configured to determine a correspondence between the plurality of tensor operations and a plurality of hardware units, where the plurality of hardware units are configured to perform operations on the tensor computation; and
a tiling strategy generation module 3703, configured to: obtain, based on characteristic information of a hardware unit corresponding to a tensor operation, storage space corresponding to the tensor operation, the data type of the element corresponding to the tensor computation dimension, and the priority of the tensor computation dimension, a tiling strategy of the tensor computation dimension corresponding to the tensor operation, where the characteristic information of the hardware unit indicates a storage characteristic or a computation characteristic of the hardware unit; and
obtain, based on tiling strategies of tensor computation dimensions corresponding to the plurality of tensor operations, the tiling strategy for the tensor computation.

In a possible implementation, the tiling strategy generation module 3703 is specifically configured to:
obtain a tiling strategy of a first tensor computation dimension based on the characteristic information of the hardware unit corresponding to the tensor operation and a data type of an element corresponding to the first tensor computation dimension;
obtain a tiling strategy of a second tensor computation dimension based on the storage space corresponding to the tensor operation and the tiling strategy of the first tensor computation dimension; and
obtain, based on the tiling strategy of the first tensor computation dimension and the tiling strategy of the second tensor computation dimension, the tiling strategy of the tensor computation dimension corresponding to the tensor operation, where
both the first tensor computation dimension and the second tensor computation dimension are tensor computation dimensions corresponding to the tensor operation, and a priority of the first tensor computation dimension is higher than a priority of the second tensor computation dimension.

In another possible implementation, the storage space corresponding to the tensor operation is related to a quantity of tensor operations corresponding to the hardware unit.

In another possible implementation, the apparatus further includes:
a reuse analysis module 3704, configured to perform storage reuse analysis on a plurality of tensor operations corresponding to the hardware unit, to determine a tensor operation that may reuse storage space between the plurality of tensor operations corresponding to the hardware unit; and
an updating module 3705, configured to update, based on a storage reuse analysis result of each tensor operation, the quantity of tensor operations corresponding to the hardware unit.

In another possible implementation, the information about the tensor operation further includes an operation type corresponding to the tensor operation; and
the determining module 3702 is specifically configured to:
obtain, according to a correspondence between operation types corresponding to a plurality of tensor operations and hardware units, at least one hardware unit corresponding to the tensor operation.

In another possible implementation, the plurality of hardware units include a storage unit and a computing unit, a characteristic of the storage unit includes a storage granularity, and a characteristic of the computing unit includes a per-batch calculation amount.

In another possible implementation, the plurality of hardware units include different types of storage units and/or different types of computing units.

The apparatus 3700 for generating a tiling strategy for tensor calculation according to embodiments of this application may correspondingly perform the method described in embodiments of this application. In addition, the foregoing and other operations and/or functions of the modules in the apparatus 3700 for generating a tiling strategy for tensor calculation are separately used to implement each corresponding procedure of the method in FIG. 2b. For brevity, details are not described herein again.

Based on a same concept as the foregoing embodiment of the method for generating a tiling strategy for tensor computation, an embodiment of this application further provides another apparatus 4700 for generating a tiling strategy for tensor computation. The apparatus 4700 for generating a tiling strategy for tensor computation includes units or modules configured to implement steps in the method for generating a tiling strategy for tensor computation shown in FIG. 2c.

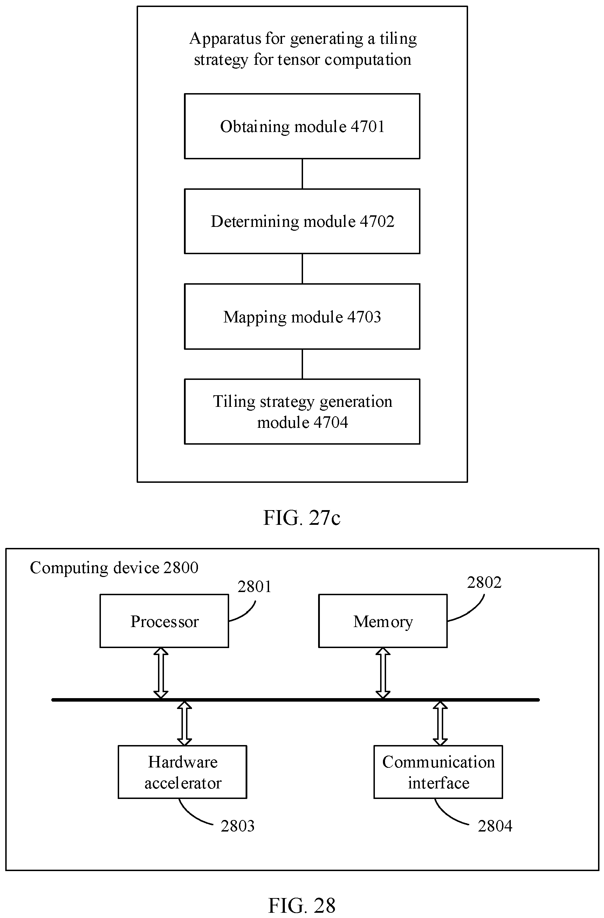

FIG. 27c is a diagram of a structure of an apparatus for generating a tiling strategy for tensor computation according to an embodiment of this application. The apparatus is applied to a computing device. As shown in FIG. 27c, the apparatus 4700 for generating a tiling strategy for tensor computation includes at least:
an obtaining module 4701, configured to obtain information about a plurality of tensor operations corresponding to the tensor computation, where information about each tensor operation includes an operation type and a hardware label, and the hardware label represents a hardware unit on which the operation type depends; and a plurality of hardware units are configured to perform operations on the tensor computation;
a determining module 4702, configured to determine a topology corresponding to a plurality of hardware units, where the topology includes a plurality of nodes, and the nodes represent the hardware units related to the tensor computation;
a mapping module 4703, configured to establish, based on the operation type and the hardware label, a mapping relationship between the plurality of tensor operations and the plurality of nodes in the topology corresponding to the plurality of hardware units, where the topology is tree-shaped and includes a root node, a branch node, and a leaf node; and
a tiling strategy generation module 4704, configured to: determine, for the plurality of nodes in a direction from the root node to a leaf node, a tiling strategy of a tensor computation dimension corresponding to a tensor operation corresponding to a node; and
obtain, based on a tiling strategy of a tensor computation dimension corresponding to a tensor operation corresponding to each of the plurality of nodes, the tiling strategy for the tensor computation.

In another possible implementation, the topology further includes a plurality of unidirectional edges, the unidirectional edge is used to connect different nodes, and the unidirectional edge represents a relationship between the nodes.

In another possible implementation, the plurality of unidirectional edges include a first-type unidirectional edge, a second-type unidirectional edge, and/or a third-type unidirectional edge, where
the first-type unidirectional edge represents that tiling strategies of tensor computation dimensions corresponding to tensor operations corresponding to nodes connected by the first-type unidirectional edge are the same;
the second-type unidirectional edge represents that a tiling strategy does not need to be determined for a tensor computation dimension corresponding to a tensor operation corresponding to a node to which the second-type unidirectional edge points; and
the third-type unidirectional edge represents that hardware units represented by nodes connected by the third-type unidirectional edge are communicatively connected.

In another possible implementation, the tiling strategy of the tensor computation dimension corresponding to the tensor operation corresponding to the node is related to allocated storage space of a hardware unit represented by the node; and
the allocated storage space of the hardware unit represented by the node is related to a quantity of available sibling nodes of the node, where the sibling node is a node located at a same layer as the node, and represents a same hardware unit type.

In another possible implementation, the quantity of the available sibling nodes of the node is related to a data size corresponding to the tensor operation and a quantity of sibling nodes.

In another possible implementation, hardware units represented by the root node and the branch node are storage units, and a hardware unit represented by the leaf node is a computing unit.

In another possible implementation, the plurality of hardware units include different types of storage units and/or different types of computing units.

The apparatus 4700 for generating a tiling strategy for tensor calculation according to embodiments of this application may correspondingly perform the method described in embodiments of this application. In addition, the foregoing and other operations and/or functions of the modules in the apparatus 4700 for generating a tiling strategy for tensor calculation are separately used to implement each corresponding procedure of the method in FIG. 2c. For brevity, details are not described herein again.

An embodiment of this application further provides a computing device, including at least one processor, a memory, and a communication interface. The processor is configured to perform the method in FIG. 1a to FIG. 24.

FIG. 28 is a diagram of a structure of a computing device according to an embodiment of this application.

As shown in FIG. 28, the computing device 2800 includes at least one processor 2801, a memory 2802, a hardware accelerator 2803, and a communication interface 2804. The processor 2801, the memory 2802, the hardware accelerator 2803, and the communication interface 2804 are communicatively connected. The communication connection may be implemented in a wired manner (for example, by using a bus), or the communication connection may be implemented in a wireless manner. The communication interface 2804 is configured to receive data sent by another device. The memory 2802 stores computer instructions, and the processor 2801 executes the computer instructions, to perform method for generating a tiling strategy and/or a classification method for tensor computation in the foregoing method embodiments. The hardware accelerator 2803 is configured to accelerate tensor computation.

It should be understood that, in embodiments of this application, the processor 2801 may be a central processing unit CPU, or the processor 2801 may be another general purpose processor, a digital signal processor (digital signal processor, DSP), or an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor or any conventional processor or the like.

The memory 2802 may include a read-only memory and a random access memory, and provide instructions and data to the processor 2801. The memory 2802 may further include a non-volatile random access memory.

The memory 2802 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be understood that the computing device 2800 according to embodiments of this application may implement the methods shown in FIG. 1a to FIG. 24 in embodiments of this application. For detailed descriptions of an implementation of the methods, refer to the foregoing descriptions. For brevity, details are not described herein again.

An embodiment of this application provides a computer-readable storage medium, where the computer-readable storage medium stores a computer program. When computer instructions are executed by a processor, the foregoing method for generating a tiling strategy for tensor computation is implemented.

An embodiment of this application provides a chip. The chip includes at least one processor and an interface. The at least one processor determines program instructions or data through the interface. The at least one processor is configured to execute the program instructions, to implement the foregoing method for generating a tiling strategy for tensor computation.

An embodiment of this application provides a computer program or a computer program product. The computer program or the computer program product includes instructions. When the instructions are executed, a computer is enabled to perform the foregoing method for generating a tiling strategy for tensor computation.

A person skilled in the art may be further aware that, in combination with the examples described in embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether these functions are performed in a hardware manner or a software manner depends on a particular application and a design constraint condition of the technical solutions. A person of ordinary skill in the art may use different methods to implement the described functions for each particular application, but it should not be considered that the implementation goes beyond the scope of this application.

The steps of the methods or algorithms described in embodiments disclosed in this specification may be implemented by hardware and a software module executed by the processor or a combination of hardware and a software module executed by the processor. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

In the foregoing specific implementations, the objective, technical solutions, and beneficial effects of this application are further described in detail. It should be understood that the foregoing descriptions are merely specific implementations of this application, but are not intended to limit the protection scope of this application. Any modification, equivalent replacement, or improvement made without departing from the spirit and principle of this application should fall within the protection scope of this application.

## Claims

1. A method for generating a tiling strategy for tensor computation, comprising
obtaining information about a plurality of tensor operations corresponding to tensor computation, wherein information about each tensor operation comprises a tensor computation dimension corresponding to the tensor operation, a data type of an element corresponding to the tensor computation dimension, and a priority of the tensor computation dimension;
determining a correspondence between the plurality of tensor operations and a plurality of hardware units, wherein the plurality of hardware units are configured to perform operations on the tensor computation;
obtaining, based on characteristic information of a hardware unit corresponding to a tensor operation, storage space corresponding to the tensor operation, the data type of the element corresponding to the tensor computation dimension, and the priority of the tensor computation dimension, a tiling strategy of the tensor computation dimension corresponding to the tensor operation, wherein the characteristic information of the hardware unit indicates a storage characteristic or a computation characteristic of the hardware unit; and
obtaining, based on tiling strategies of tensor computation dimensions corresponding to the plurality of tensor operations, the tiling strategy for the tensor computation.

2. The method according to claim 1, wherein the obtaining, based on characteristic information of a hardware unit corresponding to a tensor operation, storage space corresponding to the tensor operation, the data type of the element corresponding to the tensor computation dimension corresponding to the tensor operation, and the priority of the tensor computation dimension, a tiling strategy of the tensor computation dimension corresponding to the tensor operation comprises:
obtaining a tiling strategy of a first tensor computation dimension based on the characteristic information of the hardware unit corresponding to the tensor operation and a data type of an element corresponding to the first tensor computation dimension;
obtaining a tiling strategy of a second tensor computation dimension based on the storage space corresponding to the tensor operation and the tiling strategy of the first tensor computation dimension; and
obtaining, based on the tiling strategy of the first tensor computation dimension and the tiling strategy of the second tensor computation dimension, the tiling strategy of the tensor computation dimension corresponding to the tensor operation, wherein
both the first tensor computation dimension and the second tensor computation dimension are tensor computation dimensions corresponding to the tensor operation, and a priority of the first tensor computation dimension is higher than a priority of the second tensor computation dimension.

3. The method according to claim 1 or 2, wherein the storage space corresponding to the tensor operation is related to a quantity of tensor operations corresponding to the hardware unit.

4. The method according to claim 3, further comprising:
performing storage reuse analysis on a plurality of tensor operations corresponding to the hardware unit, to determine a tensor operation that may reuse storage space between the plurality of tensor operations corresponding to the hardware unit; and
updating, based on a storage reuse analysis result of each tensor operation, the quantity of tensor operations corresponding to the hardware unit.

5. The method according to any one of claims 1 to 4, wherein the information about the tensor operation further comprises an operation type corresponding to the tensor operation; and
the determining a correspondence between the plurality of tensor operations and a plurality of hardware units comprises:
obtaining, according to a correspondence between the operation type of the tensor operation and a hardware unit, at least one hardware unit corresponding to the tensor operation.

6. The method according to any one of claims 1 to 5, wherein the plurality of hardware units comprise a storage unit and a computing unit, a characteristic of the storage unit comprises a storage granularity, and a characteristic of the computing unit comprises a per-batch calculation amount.

7. The method according to any one of claims 1 to 6, wherein the plurality of hardware units comprise different types of storage units and/or different types of computing units.

8. A method for generating a tiling strategy for tensor computation, comprising
obtaining information about a plurality of tensor operations corresponding to the tensor computation, wherein information about each tensor operation comprises an operation type and a hardware label, and the hardware label represents a hardware unit on which the operation type depends;
determining a topology corresponding to a plurality of hardware units, wherein the topology comprises a plurality of nodes, and the nodes represent the hardware units related to the tensor computation;
establishing, based on the operation type and the hardware label, a mapping relationship between the plurality of tensor operations and the plurality of nodes in the topology corresponding to the plurality of hardware units, wherein the topology is tree-shaped and comprises a root node, a branch node, and a leaf node;
determining, for the plurality of nodes in a direction from the root node to the leaf node, a tiling strategy of a tensor computation dimension corresponding to a tensor operation corresponding to a node; and
obtaining, based on a tiling strategy of a tensor computation dimension corresponding to a tensor operation corresponding to each of the plurality of nodes, the tiling strategy for the tensor computation.

9. The method according to claim 8, wherein the topology further comprises a plurality of unidirectional edges, the unidirectional edge is used to connect different nodes, and the unidirectional edge represents a relationship between the nodes.

10. The method according to claim 9, wherein the plurality of unidirectional edges comprise a first-type unidirectional edge, a second-type unidirectional edge, and/or a third-type unidirectional edge;
the first-type unidirectional edge represents that tiling strategies of tensor computation dimensions corresponding to tensor operations corresponding to nodes connected by the first-type unidirectional edge are the same;
the second-type unidirectional edge represents that a tiling strategy does not need to be determined for a tensor computation dimension corresponding to a tensor operation corresponding to a node to which the second-type unidirectional edge points; and
the third-type unidirectional edge represents that hardware units represented by nodes connected by the third-type unidirectional edge are communicatively connected.

11. The method according to any one of claims 8 to 10, wherein the tiling strategy of the tensor computation dimension corresponding to the tensor operation corresponding to the node is related to allocated storage space of a hardware unit represented by the node; and
the allocated storage space of the hardware unit represented by the node is related to a quantity of available sibling nodes of the node, wherein the sibling node is a node located at a same layer as the node, and represents a same hardware unit type.

12. The method according to claim 11, wherein the quantity of the available sibling nodes of the node is related to a data size corresponding to the tensor operation and a quantity of sibling nodes.

13. The method according to any one of claims 8 to 12, wherein hardware units represented by the root node and the branch node are storage units, and a hardware unit represented by the leaf node is a computing unit.

14. The method according to any one of claims 8 to 13, wherein the plurality of hardware units comprise different types of storage units and/or different types of computing units.

15. An apparatus for generating a tiling strategy for tensor computation, comprising:
an obtaining module, configured to obtain information about a plurality of tensor operations corresponding to tensor computation, wherein information about each tensor operation comprises a tensor computation dimension corresponding to the tensor operation, a data type of an element corresponding to the tensor computation dimension, and a priority of the tensor computation dimension;
a determining module, configured to determine a correspondence between the plurality of tensor operations and a plurality of hardware units, wherein the plurality of hardware units are configured to perform operations on the tensor computation; and
a tiling strategy generation module, configured to: obtain, based on characteristic information of a hardware unit corresponding to a tensor operation, storage space corresponding to a tensor operation, the data type of the element corresponding to the tensor computation dimension, and the priority of the tensor computation dimension, a tiling strategy of the tensor computation dimension corresponding to the tensor operation; and
obtain, based on tiling strategies of tensor computation dimensions corresponding to the plurality of tensor operations, the tiling strategy for the tensor computation.

16. The apparatus according to claim 15, wherein the tiling strategy generation module is specifically configured to:
obtain a tiling strategy of a first tensor computation dimension based on the characteristic information of the hardware unit corresponding to the tensor operation and a data type of an element corresponding to the first tensor computation dimension;
obtain a tiling strategy of a second tensor computation dimension based on the storage space corresponding to the tensor operation and the tiling strategy of the first tensor computation dimension; and
obtain, based on the tiling strategy of the first tensor computation dimension and the tiling strategy of the second tensor computation dimension, the tiling strategy of the tensor computation dimension corresponding to the tensor operation, wherein
both the first tensor computation dimension and the second tensor computation dimension are tensor computation dimensions corresponding to the tensor operation, and a priority of the first tensor computation dimension is higher than a priority of the second tensor computation dimension.

17. The apparatus according to claim 15 or 16, wherein the storage space corresponding to the tensor operation is related to a quantity of tensor operations corresponding to the hardware unit.

18. The apparatus according to claim 17, further comprising:
a reuse analysis module, configured to perform storage reuse analysis on a plurality of tensor operations corresponding to the hardware unit, to determine a tensor operation that may reuse storage space between the plurality of tensor operations corresponding to the hardware unit; and
an updating module, configured to update, based on a storage reuse analysis result of each tensor operation, the quantity of tensor operations corresponding to the hardware unit.

19. The apparatus according to any one of claims 15 to 18, wherein the information about the tensor operation further comprises an operation type corresponding to the tensor operation; and
the determining module is specifically configured to:
obtain, according to a correspondence between operation types of the plurality of tensor operations and the hardware units, at least one hardware unit corresponding to the tensor operation.

20. The apparatus according to any one of claims 15 to 19, wherein the plurality of hardware units comprise a storage unit and a computing unit, a characteristic of the storage unit comprises a storage granularity, and a characteristic of the computing unit comprises a per-batch calculation amount.

21. The apparatus according to any one of claims 15 to 20, wherein the plurality of hardware units comprise different types of storage units and/or different types of computing units.

22. An apparatus for generating a tiling strategy for tensor computation, comprising:
an obtaining module, configured to obtain information about a plurality of tensor operations corresponding to the tensor computation, wherein information about each tensor operation comprises an operation type and a hardware label, and the hardware label represents a hardware unit on which the operation type depends;
a determining module, configured to determine a topology corresponding to a plurality of hardware units, wherein the topology comprises a plurality of nodes, and the nodes represent the hardware units related to the tensor computation;
a mapping module, configured to establish, based on the operation type and the hardware label, a mapping relationship between the plurality of tensor operations and the plurality of nodes in the topology corresponding to the plurality of hardware units, wherein the topology is tree-shaped and comprises a root node, a branch node, and a leaf node; and
a tiling strategy generation module, configured to: determine, for the plurality of nodes in a direction from the root node to the leaf node, a tiling strategy of a tensor computation dimension corresponding to a tensor operation corresponding to a node; and
obtain, based on a tiling strategy of a tensor computation dimension corresponding to a tensor operation corresponding to each of the plurality of nodes, the tiling strategy for the tensor computation.

23. The apparatus according to claim 22, wherein the topology further comprises a plurality of unidirectional edges, the unidirectional edge is used to connect different nodes, and the unidirectional edge represents a relationship between the nodes.

24. The apparatus according to claim 23, wherein the plurality of unidirectional edges comprise a first-type unidirectional edge, a second-type unidirectional edge, and/or a third-type unidirectional edge;
the first-type unidirectional edge represents that tiling strategies of tensor computation dimensions corresponding to tensor operations corresponding to nodes connected by the first-type unidirectional edge are the same;
the second-type unidirectional edge represents that a tiling strategy does not need to be determined for a tensor computation dimension corresponding to a tensor operation corresponding to a node to which the second-type unidirectional edge points; and
the third-type unidirectional edge represents that hardware units represented by nodes connected by the third-type unidirectional edge are communicatively connected.

25. The apparatus according to any one of claims 22 to 24, wherein the tiling strategy of the tensor computation dimension corresponding to the tensor operation corresponding to the node is related to allocated storage space of a hardware unit represented by the node; and
the allocated storage space of the hardware unit represented by the node is related to a quantity of available sibling nodes of the node, wherein the sibling node is a node located at a same layer as the node, and represents a same hardware unit type.

26. The apparatus according to claim 25, wherein the quantity of the available sibling nodes of the node is related to a data size corresponding to the tensor operation and a quantity of sibling nodes.

27. The apparatus according to any one of claims 22 to 26, wherein hardware units represented by the root node and the branch node are storage units, and a hardware unit represented by the leaf node is a computing unit.

28. The apparatus according to any one of claims 22 to 27, wherein the plurality of hardware units comprise different types of storage units and/or different types of computing units.

29. A computing device, comprising a memory and a processor, wherein the memory stores executable code, and the processor executes the executable code to implement the method according to any one of claims 1 to 7 and/or the method according to any one of claims 8 to 14.

30. A computer-readable storage medium, wherein the computer-readable storage medium stores a computer program, and when the computer program is executed on a computer, the computer is enabled to perform the method according to any one of claims 1 to 7 and/or the method according to any one of claims 8 to 14.
